# FASCICULE DE BREVET EUROPEEN

(11) **EP 1 898 336 B1**
(45) Date de publication et mention de la délivrance du brevet: **02.12.2009**
(21) Numéro de dépôt: 07017197.0
(22) Date de dépôt: 03.09.2007
(51) Int. Cl.: G06K 7/00, G06K 19/07

(54) **Procédé de connexion d`un circuit intégré sans contact à un composant NFC**
Verfahren zur Verbindung eines kontaktlosen integrierten Schaltkreises mit einem NFC-Modul
Method of connecting a contactless integrated circuit to an NFC component

(30) Priorité: 11.09.2006 FR 0607929
(43) Date de publication de la demande: 12.03.2008
(73) Titulaire: Inside Contactless, 13856 Aix en Provence Cedex 3 (FR)
(72) Inventeur: Charrat, Bruno, 13090 Aix en Provence (FR)
(74) Mandataire: Marchand, André

(56) Documents cités:
- WO-A-00/39741
- WO-A-2005/020135
- GB-A- 2 406 023

## Description

La présente invention s'inscrit dans le cadre du développement et du perfectionnement de la technologie NFC (Near Field Communication).

La technologie NFC est actuellement développée par un consortium industriel regroupé sous le nom de Forum NFC (http://www.nfc-forum.org). La technologie NFC est dérivée de la technologie RFID (Radio Frequency Identification) et utilise des composants NFC présentant une interface de communication sans contact (émission/réception de données sans contact) et plusieurs modes de fonctionnement, à savoir un mode "lecteur" (Reader Mode), un mode "émulation de carte", et un mode "device" (ou "device-to-device" soit "dispositif à dispositif"). Dans le mode lecteur, le composant NFC fonctionne comme un lecteur RFID conventionnel pour accéder en lecture ou écriture à une puce RFID (carte à puce ou étiquette sans contact notamment). Il émet un champ magnétique, envoie des données par modulation de l'amplitude du champ magnétique et reçoit des données émises par rétromodulation (modulation de charge). Dans le mode émulation, décrit par le brevet EP 1 327 222 au nom de la demanderesse, le composant NFC fonctionne de façon passive à la manière d'un transpondeur pour dialoguer avec un lecteur ou un composant NFC dans le mode actif, et être vu par l'autre lecteur ou composant NFC comme une puce RFID. Le composant NFC dans le mode passif n'émet pas de champ magnétique, reçoit des données en démodulant un champ magnétique émis par l'autre lecteur et émet des données par rétromodulation.

Dans le mode "device", le composant doit s'apparier avec un autre composant NFC et chaque composant NFC se place alternativement dans un état passif (sans émission de champ) pour recevoir des données et dans un état actif (avec émission de champ) pour émettre des données.

En sus de ces trois modes de fonctionnement, un composant NFC peut mettre en oeuvre plusieurs protocoles de communication sans contact et est par exemple capable d'échanger des données suivant ces divers protocoles, par exemple ISO 14443-A et ISO 14443-B désignés dans ce qui suit "ISO-A" et "ISO-B". Chaque protocole définit une fréquence d'émission du champ magnétique, une méthode de modulation de l'amplitude du champ magnétique pour émettre des données dans le mode actif, et une méthode de rétromodulation pour émettre des données dans le mode passif. Un composant NFC est ainsi un dispositif multimode et multiprotocole. La demanderesse commercialise par exemple un composant NFC sous la désignation "MicroRead".

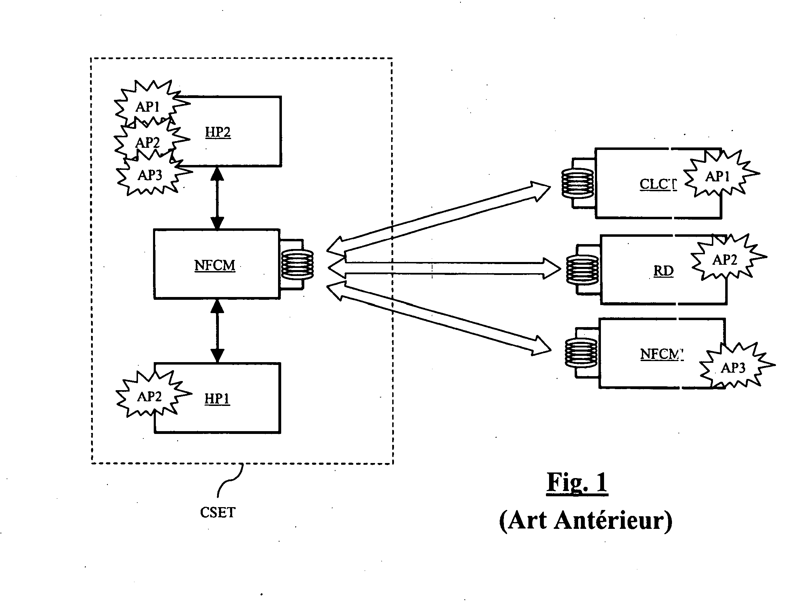

En raison de ses capacités de communication étendues, un composant NFC est destiné à être intégré dans des dispositifs portatifs tels des téléphones portables ou des PDA (Assistant Numérique Personnel). On est donc amené à réaliser un chipset NFC du type représenté sur la figure 1, désigné CSET, c'est à dire un ensemble de puces comprenant un composant NFC désigné NFCM et au moins un processeur hôte HP1. Dans de nombreuses applications, le chipset NFC comprend également un second processeur hôte HP2, comme représenté, et parfois un troisième voire plus. Un processeur hôte est généralement un microprocesseur ou un microcontrôleur qui est connecté à un port du composant NFC.

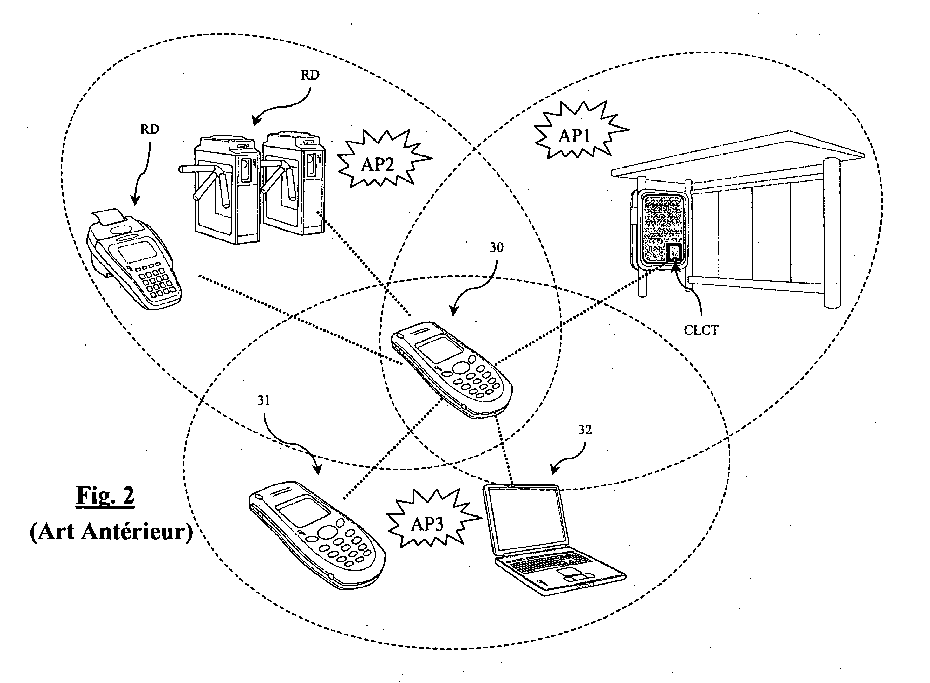

Le processeur hôte HP1 est par exemple un circuit intégré sécurisé, comme un circuit intégré de carte SIM ("Subscriber Identity Module"), et le processeur hôte HP2 est par exemple un processeur non sécurisé comme le circuit de bande de base d'un téléphone mobile ("baseband" ou circuit de radiotéléphonie). Les ressources du composant NFC sont mises à la disposition des processeurs HP1, HP2 pour leur permettre de gérer des applications sans contact. De telles applications sont illustrées sur la figure 2, qui représente un téléphone mobile 30 équipé du chipset NFC de la figure 1, comprenant le composant NFC et les processeurs hôtes HP1, HP2. On distingue sur cette figure des applications de type AP1, AP2 et AP3. Dans les applications de type AP1, le composant NFC est dans le mode lecteur pour lire ou écrire un circuit intégré sans contact CLCT, par exemple une carte de visite électronique ou une étiquette publicitaire. Le téléphone mobile est dans ce cas utilisé comme un lecteur RFID. Dans les applications de type AP2, le composant NFC du téléphone 30 est dans le mode émulation de carte pour être lu par des lecteurs RD conventionnels. Il s'agit généralement d'applications au paiement ou au contrôle d'accès payant (machine de paiement, entrée de métro, etc.). Le téléphone mobile 30 est alors utilisé comme une carte à puce. Dans les applications de type AP3, le composant NFC du téléphone 30 est dans le mode "device" et dialogue avec un autre dispositif, par exemple un autre composant NFC embarqué dans un téléphone mobile 31 ou dans un ordinateur 32.

Les applications de type AP1 et AP3 sont généralement gérées par le processeur non sécurisé HP2, tandis que les applications de type AP2 sont le plus souvent gérées par le processeur sécurisé HP1, comme illustré sur la figure 1, car l'accès au service nécessite une identification sécurisée de l'abonné. Des applications de type AP2 gratuites et non sécurisées peuvent également être gérées par le processeur HP2, par exemple la lecture de données de type "contacts" (adresses et numéros de téléphone) dans le téléphone, etc.

Ainsi, la réalisation d'un chipset NFC nécessite de prévoir un acheminement des flux de données entre le composant NFC et chacun des processeurs hôtes HP1, HP2. Ces flux de données comprennent des données entrantes, reçues par le composant NFC au moyen de son interface de communication sans contact puis acheminées jusqu'aux processeurs hôtes, et des données sortantes, émises par les processeurs hôtes puis acheminées au composant NFC pour être émises par celui-ci au moyen de son interface de communication sans contact.

La création d'un chemin de données entre un composant NFC et un processeur hôte HP2 de type "baseband" ne pose généralement pas de problème technique car le processeur hôte, embarqué dans le téléphone mobile, dispose de moyens de communication étendus, par exemple un port de communication UART ("Universal Asynchronous Receiving Transmitting") permettant un transfert de données à haut débit.

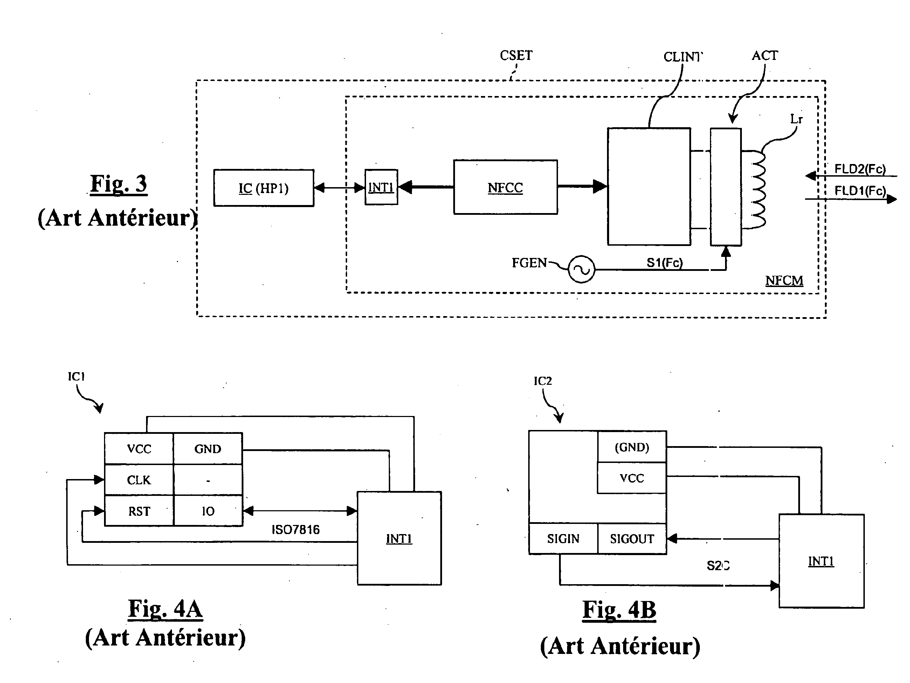

La création d'un chemin de données entre un composant NFC et un circuit intégré sécurisé IC en tant que processeur hôte HP1 est illustrée sur la figure 3, qui représente schématiquement l'architecture du composant NFCM de la figure 1 et sa connexion au circuit intégré IC.

Le composant NFCM comprend un circuit d'interface sans contact CLINT, un circuit d'antenne ACT connecté au circuit CLINT, un générateur de signal alternatif FGEN, un processeur principal NFCC (microprocesseur ou microcontrôleur) et un circuit d'interface INT1 permettant de connecter le circuit intégré IC. Le circuit d'interface CLINT et le circuit d'antenne ACT forment l'interface de communication sans contact du composant NFCM et le circuit d'antenne ACT comprend une bobine d'antenne Lr. Le générateur FGEN fournit un signal alternatif S1(Fc) de fréquence Fc, utilisé comme signal d'excitation du circuit d'antenne ACT permettant d'émettre un champ magnétique FLD1(Fc) lorsque le composant NFCM est dans le mode actif. Le générateur FGEN est arrêté dans le mode passif, le composant NFCM recevant dans ce cas un champ magnétique FLD2(Fc) émis par un dispositif externe (lecteur RFID ou autre composant NFC).

La détermination d'un protocole de communication "universel" entre le composant NFCM et le circuit intégré IC ne semble pas possible en pratique car elle se heurte à un problème de rationalisation de la production industrielle des circuits intégrés. En effet les circuits intégrés sécurisés sont actuellement de deux types : les circuits intégrés à contact, généralement de type ISO 7816 (cartes SIM) et les circuits intégrés sans contact, réalisés par exemple selon les normes ISO-A (ISO 14443-A) ou ISO-B (ISO 14443-B). Il existe également des circuits intégrés hybrides comprenant à la fois une interface ISO 7816 et une interface de communication sans contact.

Il est important de prévoir des circuits intégrés pouvant être utilisés de façon conventionnelle mais pouvant également être insérés dans un chipset NFC, afin de ne pas créer une diversité de modèles de circuits intégrés qui grèverait leur prix de revient.

Ainsi, comme illustré sur la figure 4A, les circuits intégrés ISO 7816 (IC1) sont connectés au composant NFCM en utilisant leurs plages de contact ISO 7816, à savoir VCC, GND, IO, RST, CLK (alimentation électrique, masse, entrée/sortie de données, "Reset" et horloge), lesquelles ont été initialement conçues pour échanger des données avec un lecteur de carte via un bus ISO 7816. Leur connexion au composant NFCM est faite par le circuit d'interface INT1 et celui-ci est configuré pour assurer la gestion du bus ISO 7816 et la conversion des données entrantes et sortantes véhiculées par le bus.

Le bus ISO 7816 présente toutefois l'inconvénient d'être lent et peu adapté à des transferts de données à haut débit reçues par le composant NFCM au moyen de son interface de communication sans contact.

D'autre part, les circuits intégrés sans contact possèdent une interface de communication sans contact apte à émettre et recevoir des données avec un débit plus élevé que ne le permet le bus ISO 7816, ainsi que des moyens de traitement de données adaptés à un tel débit. Mais cette interface de communication est prévue pour fonctionner en utilisant un circuit d'antenne et en présence d'un champ magnétique excitateur. On a donc proposé un bus de communication spécifique, appelé bus S2C, pour connecter ce type de circuit intégré à un composant NFC.

Les caractéristiques du bus S2C sont décrites dans le document intitulé "S2C Interface for NFC, Adding a general purpose interface between NFC and Secure IC to Secure NFC, 21-01-2005, Survey V1.00" (http://www.semiconductors.philips.com /acrobat/other/identification/S2C survev_10.pdf). Le bus S2C se compose d'un signal SIGIN émis par le circuit intégré et d'un signal SIGOUT émis par le composant NFC. Le signal SIGIN véhicule l'enveloppe d'un signal de rétromodulation porteur de données, que le composant NFCM doit appliquer à son circuit d'antenne. Le signal SIGOUT est un signal oscillant qui présente une modulation par sauts de phase (modulation PSK ou "Phase Shift Keying") représentative des variations d'amplitude du champ magnétique reçu par le composant NFCM dans le mode passif et par conséquent représentative des données reçues par ce dernier.

Ainsi, comme illustré sur la figure 4B, les circuits intégrés sans contact (IC2) sont connectés au composant NFCM au moyen de contacts dédiés SIGIN, SIGOUT, le circuit d'interface INT1 étant configuré pour assurer la conversion des données entrantes et sortantes véhiculées par le bus S2C.

Le bus S2C présente toutefois divers inconvénients. D'une part, il nécessite une adaptation des circuits intégrés sans contact existants par l'ajout d'un circuit d'interface S2C. Les fabricants doivent donc réaliser d'une part des lots de circuits intégrés destinés à des applications sans contact et d'autre part des lots de circuits intégrés modifiés équipés d'une interface S2C. De plus, les composants d'interface S2C, de part et d'autre du bus S2C, commutent à haute vitesse et présentent une consommation électrique importante. Enfin, le bus S2C ne permet pas le transfert d'énergie. Ainsi, si le circuit intégré est purement passif, une liaison supplémentaire Vcc et GND doit être prévue pour lui fournir une tension d'alimentation Vcc et la masse correspondante GND, comme représenté en figure 4B.

La présente invention vise à pallier ces inconvénients.

Plus particulièrement, la présente invention vise un moyen pour échanger des données avec un circuit intégré sans contact en minimisant les modifications à apporter au circuit intégré, afin de rationaliser la production de circuits intégrés.

Pour atteindre cet objectif, l'idée de la présente invention est d'utiliser les bornes de connexion d'antenne d'un circuit intégré sans contact pour établir un chemin de données entre le circuit intégré et un composant NFC. A cet effet, un signal alternatif qui émule un signal d'antenne est appliqué au moins sur l'une des bornes d'antenne du circuit intégré. Ce signal d'émulation est "vu" par le circuit intégré comme un signal d'antenne. Des circuits démodulateur et modulateur du circuit intégré, initialement prévus pour agir sur le signal d'antenne, sont alors opérationnels et peuvent agir sur le signal d'émulation comme s'il s'agissait d'un signal d'antenne. Des données peuvent ainsi être envoyées au circuit intégré en les injectant dans le signal d'émulation. De même, des données peuvent être reçues du circuit intégré en les extrayant du signal d'émulation. Dans ces conditions, tout type de circuit intégré sans contact peut-être utilisé sans modification, pour peu que le signal d'émulation et la manière dont des données y sont injectées ou extraites soient compatibles avec le circuit intégré. L'invention est donc d'application quasi-universelle et ne nécessite, en principe, aucune modification d'un circuit sans contact pour être applicable.

Plus particulièrement, la présente invention prévoit un procédé pour échanger des données avec un circuit intégré, dans lequel le circuit intégré comprend des bornes de connexion d'antenne et des moyens pour recevoir et émettre des données à partir d'un signal d'antenne reçu sur les bornes de connexion d'antenne, et comprenant des étapes consistant à ne pas connecter à une antenne les bornes de connexion d'antenne du circuit intégré, appliquer un signal d'émulation alternatif au moins à une première des bornes de connexion d'antenne du circuit intégré, au moyen d'une liaison filaire, de manière à émuler la présence d'un signal d'antenne sur la première borne de connexion d'antenne, envoyer des données au circuit intégré en les injectant dans le signal d'émulation, et recevoir des données émises par le circuit intégré en les prélevant dans le signal d'émulation.

Selon un mode de réalisation, l'étape d'injection de données dans le signal d'émulation comprend une étape de modulation du signal d'émulation au moyen d'un signal porteur de données.

Selon un mode de réalisation, les données présentes dans le signal porteur de données sont obtenues par démodulation d'un signal d'antenne reçu par l'intermédiaire d'un circuit d'antenne d'un composant hébergeant le circuit intégré.

Selon un mode de réalisation, l'étape de prélèvement de données dans le signal d'émulation comprend une étape d'extraction d'un signal de rétromodulation porteur de données par détection de variations de courant ou de tension dans le signal d'émulation.

Selon un mode de réalisation, le procédé comprend une étape consistant à appliquer une tension continue à une seconde des bornes de connexion d'antenne du circuit intégré, pour alimenter électriquement le circuit intégré.

Selon un mode de réalisation, le procédé comprend une étape consistant à relier une borne de masse du circuit intégré à une borne de masse d'un dispositif utilisé pour échanger des données avec le circuit intégré.

L'invention concerne également un procédé pour établir un chemin de données entre un circuit intégré hôte et un composant NFC comprenant un circuit d'antenne pour la réception et l'émission de données sans contact, dans lequel le circuit intégré hôte comprend des bornes de connexion d'antenne et des moyens pour recevoir et émettre des données en démodulant un signal d'antenne reçu sur les bornes de connexion d'antenne, et comprenant des étapes consistant à ne pas connecter à une antenne les bornes de connexion d'antenne du circuit intégré hôte, relier au moins une première des bornes de connexion d'antenne du circuit intégré hôte au composant NFC au moyen d'une liaison filaire, appliquer un signal d'émulation alternatif fourni par le composant NFC au moins à la première borne de connexion d'antenne, de manière à émuler la présence d'un signal d'antenne, injecter dans le signal d'émulation des données fournies par le composant NFC, et prélever dans le signal d'émulation des données émises par le circuit intégré hôte et les fournir au composant NFC.

Selon un mode de réalisation, l'étape d'injection de données dans le signal d'émulation comprend une étape de modulation du signal d'émulation au moyen d'un signal porteur de données.

Selon un mode de réalisation, le procédé comprend une étape consistant à produire le signal porteur de données en démodulant un signal d'antenne reçu dans le circuit d'antenne du composant NFC de manière que des données reçues par le composant NFC soient répercutées au circuit intégré hôte de façon transparente.

Selon un mode de réalisation, l'étape d'injection de données dans le signal d'émulation comprend des étapes consistant à : démoduler un signal d'antenne reçu dans le circuit d'antenne du composant NFC pour produire un premier signal porteur de données, décoder le premier signal porteur de données, reconstruire un second signal porteur de données à partir de données présentes dans le premier signal porteur de données, et moduler le signal d'émulation, au moyen du second signal porteur de données.

Selon un mode de réalisation, le second signal porteur de données présente un codage différent d'un codage du premier signal porteur de données.

Selon un mode de réalisation, l'étape de prélèvement de données dans le signal d'émulation comprend une étape d'extraction d'un signal de rétromodulation porteur de données, par détection de variations de courant ou de tension dans le signal d'émulation.

Selon un mode de réalisation, le procédé comprend une étape consistant à appliquer le signal de rétromodulation à un circuit modulateur du composant NFC, pour que le composant NFC réémette les données via le circuit d'antenne de façon transparente.

Selon un mode de réalisation, l'étape de prélèvement de données dans le signal d'émulation comprend des étapes consistant à extraire du signal d'émulation un premier signal de rétromodulation porteur de données, décoder le premier signal de rétromodulation, reconstruire un second signal de rétromodulation à partir de données présentes dans le premier signal de rétromodulation, et appliquer le second signal de rétromodulation à un circuit modulateur pour émettre les données via le circuit d'antenne du composant NFC.

Selon un mode de réalisation, le second signal de rétromodulation présente un codage différent d'un codage du premier signal porteur de données sortantes.

Selon un mode de réalisation, le signal d'émulation oscille à la même fréquence qu'une fréquence de travail du circuit d'antenne du composant NFC.

Selon un mode de réalisation, le signal d'émulation oscille à une fréquence différente d'une fréquence de travail du circuit d'antenne du composant NFC.

Selon un mode de réalisation, le procédé comprend une étape consistant à extraire un signal alternatif du circuit d'antenne, et à utiliser le signal alternatif comme signal d'émulation.

Selon un mode de réalisation, le procédé comprend une étape consistant à configurer le composant NFC pour qu'il comprenne un mode de fonctionnement actif où le composant NFC applique un signal d'excitation au circuit d'antenne et un mode de fonctionnement passif où le composant NFC extrait le signal alternatif du circuit d'antenne.

Selon un mode de réalisation, le procédé comprend des étapes consistant à relier une seconde des bornes de connexion d'antenne au composant NFC au moyen d'une liaison filaire, et appliquer une tension continue à la seconde borne de connexion d'antenne, pour alimenter électriquement le circuit intégré hôte.

Selon un mode de réalisation, le procédé comprend une étape consistant à relier une borne de masse du circuit intégré hôte à une borne de masse du composant NFC.

L'invention concerne également un composant NFC comprenant un circuit d'antenne pour la réception et l'émission de données sans contact, et prévu pour recevoir au moins un circuit intégré hôte afin d'échanger des données avec le circuit intégré hôte, comprenant au moins une borne de connexion pour connecter une borne de connexion d'antenne d'un circuit intégré hôte du type fonctionnant sans contact mais dépourvu d'antenne, et un circuit d'interface pour appliquer à la borne de connexion d'antenne du circuit intégré hôte un signal d'émulation alternatif, de manière à émuler la présence d'un signal d'antenne, injecter dans le signal d'émulation des données fournies par le composant NFC, et prélever dans le signal d'émulation des données émises par le circuit intégré hôte.

Selon un mode de réalisation, le circuit d'interface est agencé pour injecter des données dans le signal d'émulation en modulant le signal d'émulation au moyen d'un signal porteur de données.

Selon un mode de réalisation, le composant NFC comprend un démodulateur pour démoduler un signal d'antenne reçu dans le circuit d'antenne et le signal porteur de données est fourni au circuit d'interface sans traitement de manière que des données reçues via le circuit d'antenne soient répercutées au circuit intégré hôte de façon transparente.

Selon un mode de réalisation, le composant NFC comprend un démodulateur pour démoduler un signal d'antenne reçu dans le circuit d'antenne et fournir un premier signal porteur de données au circuit d'interface, des premiers moyens de traitement pour reconstruire un second signal porteur de données à partir de données présentes dans le premier signal porteur de données, et un circuit modulateur pour moduler le signal d'émulation au moyen du second signal porteur de données.

Selon un mode de réalisation, les premiers moyens de traitement reconstruisent le second signal porteur de données avec un codage différent d'un codage du premier signal porteur de données.

Selon un mode de réalisation, les premiers moyens de traitement comprennent un contrôleur principal du composant NFC.

Selon un mode de réalisation, les premiers moyens de traitement comprennent un circuit modulateur dédié du circuit d'interface, distinct d'un contrôleur principal du composant NFC.

Selon un mode de réalisation, le circuit d'interface comprend un circuit détecteur pour détecter des variations de courant ou de tension dans le signal d'émulation et extraire du signal d'émulation un signal de rétromodulation porteur de données.

Selon un mode de réalisation, le composant NFC comprend un circuit modulateur pour émettre des données via le circuit d'antenne, et le signal de rétromodulation est appliqué au circuit modulateur sans traitement pour que le composant NFC réémette les données via le circuit d'antenne de façon transparente.

Selon un mode de réalisation, le composant NFC comprend des seconds moyens de traitement pour reconstruire un second signal de rétromodulation à partir de données présentes dans le premier signal de rétromodulation, et un circuit modulateur pour appliquer le second signal de rétromodulation au circuit d'antenne et émettre les données via le circuit d'antenne du composant NFC.

Selon un mode de réalisation, les seconds moyens de traitement reconstruisent le second signal porteur de données avec un codage différent d'un codage du premier signal porteur de données.

Selon un mode de réalisation, les seconds moyens de traitement comprennent un contrôleur principal du composant NFC.

Selon un mode de réalisation, les seconds moyens de traitement comprennent un circuit démodulateur dédié du circuit d'interface, distinct d'un contrôleur principal du composant NFC, pour extraire les données présentes dans le premier signal de rétromodulation.

Selon un mode de réalisation, le signal d'émulation oscille à la même fréquence qu'une fréquence de travail du circuit d'antenne du composant NFC.

Selon un mode de réalisation, le signal d'émulation oscille à une fréquence différente d'une fréquence de travail du circuit d'antenne du composant NFC.

Selon un mode de réalisation, le composant NFC comprend des moyens pour extraire un signal alternatif du circuit d'antenne, et le circuit d'interface utilise le signal alternatif extrait du circuit d'antenne comme signal d'émulation.

Selon un mode de réalisation, le composant NFC comprend un mode de fonctionnement actif où le composant NFC applique un signal d'excitation au circuit d'antenne et un mode de fonctionnement passif où le composant NFC extrait le signal alternatif du circuit d'antenne.

Selon un mode de réalisation, le composant NFC comprend une seconde borne de connexion pour connecter une seconde des bornes de connexion d'antenne du circuit intégré hôte, et des moyens pour appliquer une tension continue à la seconde borne de connexion d'antenne, pour alimenter électriquement le circuit intégré hôte.

Selon un mode de réalisation, le composant NFC comprend une borne de masse pour connecter une borne de masse du circuit intégré hôte à un circuit de masse du composant NFC.

Ces objets, caractéristiques et avantages ainsi que d'autres de la présente invention seront exposés plus en détail dans la description suivante d'un exemple de mise en oeuvre du procédé de l'invention et de divers exemples de réalisation d'un composant NFC selon l'invention, faite à titre non limitatif en relation avec les figures jointes parmi lesquelles :
- la figure 1 précédemment décrite représente sous forme de bloc une architecture classique de chipset NFC,
- la figure 2 précédemment décrite illustre diverses applications d'un chipset NFC intégré dans un téléphone mobile,
- la figure 3 précédemment décrite représente sous forme de bloc l'architecture classique d'un composant NFC présent dans le chipset NFC de la figure 1 et relié à un circuit intégré hôte,
- les figures 4A, 4B précédemment décrites représentent deux modes de connexion classiques d'un circuit intégré hôte au composant NFC de la figure 3,
- la figure 5 représente un composant NFC relié à un circuit intégré hôte selon le procédé de l'invention,
- les figures 6A, 6B représentent deux architectures classiques de circuits intégrés sans contact,
- la figure 7 représente un mode de réalisation du composant NFC de la figure 5 prévu pour recevoir l'un des circuits intégrés représentés sur les figures 6A, 6B,
- les figures 8A à 8D représentent des signaux permettant de transférer au circuit intégré des données entrantes codées ISO-A reçues par le composant NFC de la figure 7,
- les figures 9A à 9D représentent des signaux permettant de transférer au circuit intégré des données entrantes codées ISO-B reçues par le composant NFC de la figure 7,
- les figures 10A à 10D représentent des signaux permettant de transférer au composant NFC de la figure 7 des données sortantes codées ISO-A émises par le circuit intégré,
- les figures 11A à 11D représentent des signaux permettant de transférer au composant NFC de la figure 7 des données sortantes codées ISO-B émises par le circuit intégré,
- les figures 12A, 12B représentent des circuits intégrés sans contact selon les figures 6A, 6B connectés au composant NFC de la figure 7,
- la figure 13 représente une variante du composant NFC de la figure 7,
- la figure 14 représente une autre variante du composant NFC de la figure 7,
- la figure 15 représente encore une autre variante du composant NFC de la figure 7, et
- la figure 16 représente la structure d'un circuit d'interface selon l'invention, présent dans le composant NFC de la figure 15.

### Aspects généraux du procédé selon l'invention

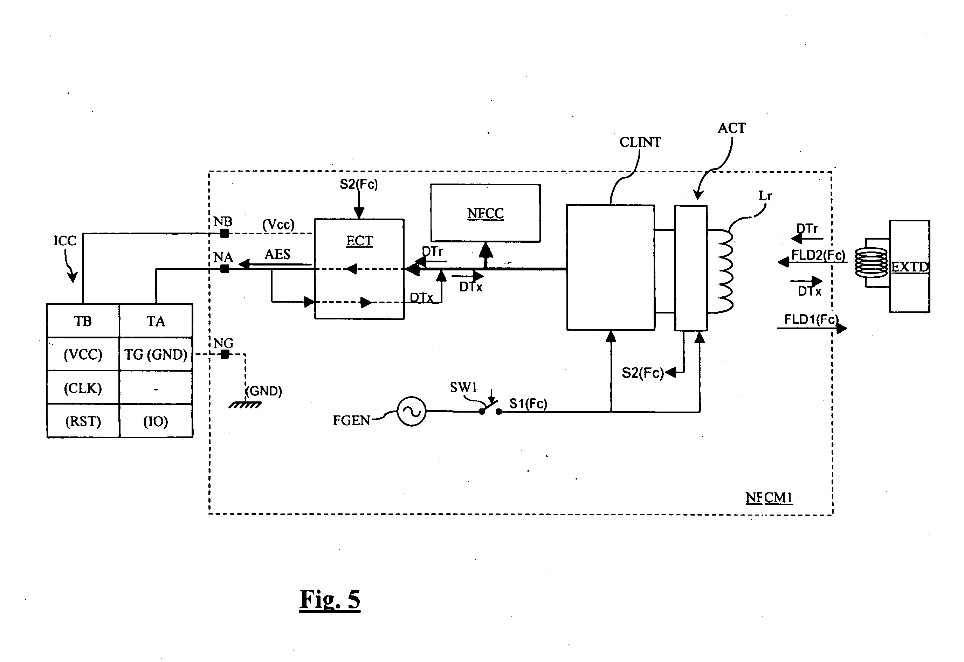

La figure 5 représente schématiquement la structure d'un composant NFC désigné "NFCM1", comprenant des moyens pour établir un chemin de données avec un circuit intégré sans contact ICC conformément au procédé de l'invention, le circuit intégré ICC étant connecté au composant NFCM1 en tant que processeur hôte.

Le composant NFCM1 comprend classiquement un contrôleur NFCC, un circuit d'interface CLINT et un circuit d'antenne ACT comportant une bobine d'antenne Lr. Le circuit d'interface CLINT est connecté au circuit d'antenne ACT et forme avec celui-ci l'interface de communication sans contact du composant (ou interface d'émission/réception de données sans contact). Lorsque le composant NFCM1 est dans le mode actif, un générateur FGEN (oscillateur par exemple) fournit au circuit d'antenne ACT un signal S1(Fc) de fréquence Fc, en tant que signal d'excitation, pour l'émission d'un champ magnétique alternatif FLD1(Fc). Un interrupteur SW1 représenté dans l'état ouvert schématise le fait que le signal d'excitation S1(Fc) n'est plus appliqué au circuit d'antenne lorsque le composant NFCM1 est dans le mode passif, le générateur FGEN étant de préférence hors tension. Dans le mode passif, le circuit d'antenne ACT est excité par un champ magnétique externe FLD2(Fc) émis par un dispositif externe EXTD (lecteur RFID ou composant NFC dans le mode actif) et fournit un signal alternatif S2(Fc) à partir d'une tension apparaissant par couplage inductif dans la bobine d'antenne Lr.

Le circuit intégré ICC comprend deux bornes d'antenne TA, TB (plages de connexion d'antenne) destinées à être connectées à une bobine d'antenne. Selon l'invention, le circuit intégré ICC est dépourvu de bobine d'antenne et est relié au composant NFCM1 au moyen de ses bornes d'antenne TA, TB.

Le composant NFCM1 comprend un circuit d'interface ECT selon l'invention, une première borne de connexion NA reliée au circuit d'interface ECT et une seconde borne de connexion NB. La borne NA est reliée à la première borne d'antenne TA du circuit intégré ICC pour former une première liaison filaire NA-TA. La borne NB est optionnellement reliée à la seconde borne d'antenne TB du circuit intégré, pour former une seconde liaison filaire NB-TB.

Ces liaisons dites filaires peuvent comprendre un connecteur intermédiaire, non représenté ici, par exemple des lames de contact qui s'appuient sur les bornes d'antenne TA, TB du circuit intégré. Par ailleurs les "bornes d'antenne" peuvent être des plages de contact spécifiquement prévues pour la mise en oeuvre de l'invention et reliées électriquement aux plages de connexion d'antenne TA, TB, la modification à apporter à un circuit intégré pour réaliser de telles plages de contact additionnelles étant mineure.

Le circuit intégré ICC peut être du type hybride (ou "combi") décrit par le brevet EP 0 917 684 au nom de la demanderesse, et comprendre également des contacts ISO 7816 (VCC, GND, CLK, RST, IO), comme représenté sur la figure 5. Toutefois, ceux-ci ne sont pas utilisés ici en raison des inconvénients du bus ISO 7816, mentionnés plus haut.

Ainsi, selon l'invention, le composant NFCM1 est relié électriquement au circuit intégré ICC en lieu et place d'une bobine d'antenne. Le contact de masse GND du circuit intégré peut optionnellement être connecté à une borne de masse NG du composant NFCM1 afin d'équilibrer les potentiels de masse respectifs du composant NFCM1 et du circuit intégré ICC. Si le circuit intégré n'est pas hybride, un contact de masse TG spécifique peut être prévu à cet effet. Toutefois, comme cela sera vu plus loin, la connexion des masses respectives du composant NFCM1 et du circuit intégré ICC n'est pas indispensable à la mise en oeuvre de l'invention, les potentiels de masse respectifs s'équilibrant naturellement à travers les circuits de chaque élément.

Selon l'invention toujours, le circuit d'interface ECT applique au moins sur la première borne d'antenne TA un signal alternatif AES qui émule le signal d'antenne que recevrait le circuit intégré ICC s'il était équipé de sa bobine d'antenne et si celle-ci se trouvait plongée dans un champ magnétique alternatif.

Le signal d'émulation AES oscille à une fréquence Fc qui est celle de la fréquence de travail ou fréquence d'accord du circuit d'antenne (non utilisé) du circuit intégré ICC, qui est généralement identique à la fréquence de travail du circuit d'antenne ACT du composant NFCM1. Dans ce cas, le signal S2(Fc) fourni par le circuit d'antenne ACT est utilisé comme signal d'émulation AES et est fourni au circuit ECT pour que ce dernier l'applique à la borne d'antenne TA. La fréquence Fc est par exemple de 13,56 MHz, tel que recommandé par les normes ISO-A et ISO-B.

Selon l'invention encore, le signal d'émulation AES est utilisé pour transmettre au circuit intégré ICC des données entrantes DTr fournies par le composant NFCM1, ou pour transmettre au composant NFCM1 des données sortantes DTx fournies par le circuit intégré. Les données entrantes DTr sont par exemple des données reçues par le composant NFCM1 dans le mode passif au moyen du circuit d'antenne ACT, au cours d'une communication avec le dispositif externe EXTD. Les données DTr sont alors injectées par le circuit d'interface ECT dans le signal d'émulation AES, afin que le circuit intégré ACC les reçoivent. Les données sortantes DTx sont par exemple des données devant être envoyées par le circuit intégré ICC au dispositif externe EXTD au cours de la même communication. Les données DTx sont injectées dans le signal AES par le circuit intégré et sont extraites par le circuit d'interface ECT pour être envoyées au dispositif externe EXTD par le composant NFCM1.

Selon une caractéristique optionnelle mais avantageuse de l'invention, la borne d'antenne TB du circuit intégré ICC est utilisée pour fournir à celui-ci une énergie électrique, par exemple sous la forme d'une tension d'alimentation continue Vcc qui est appliquée par le circuit ECT à la borne d'antenne TB via la borne de connexion NB.

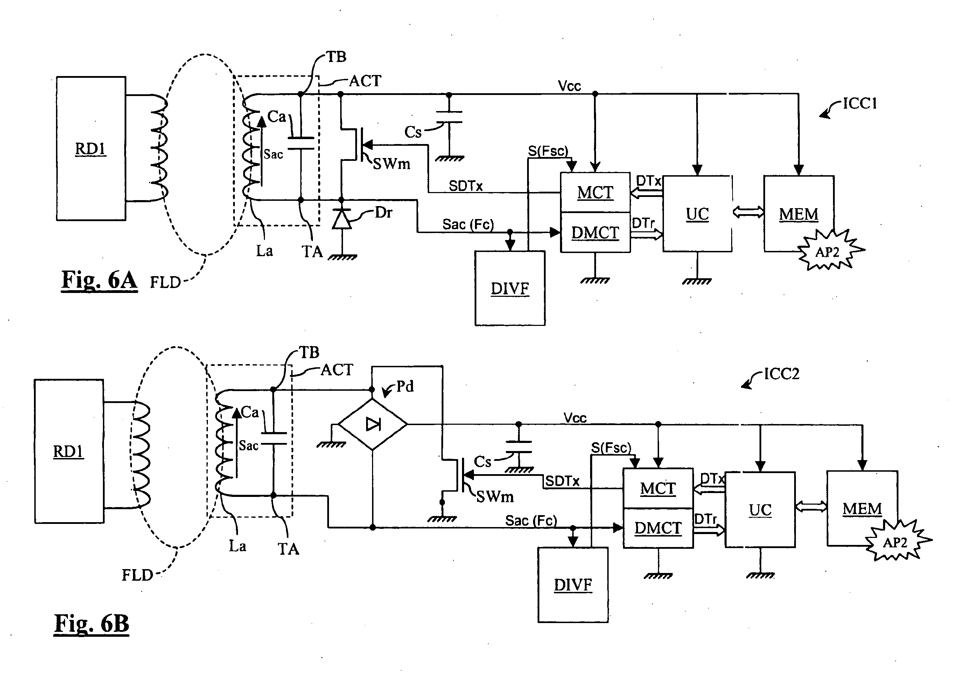

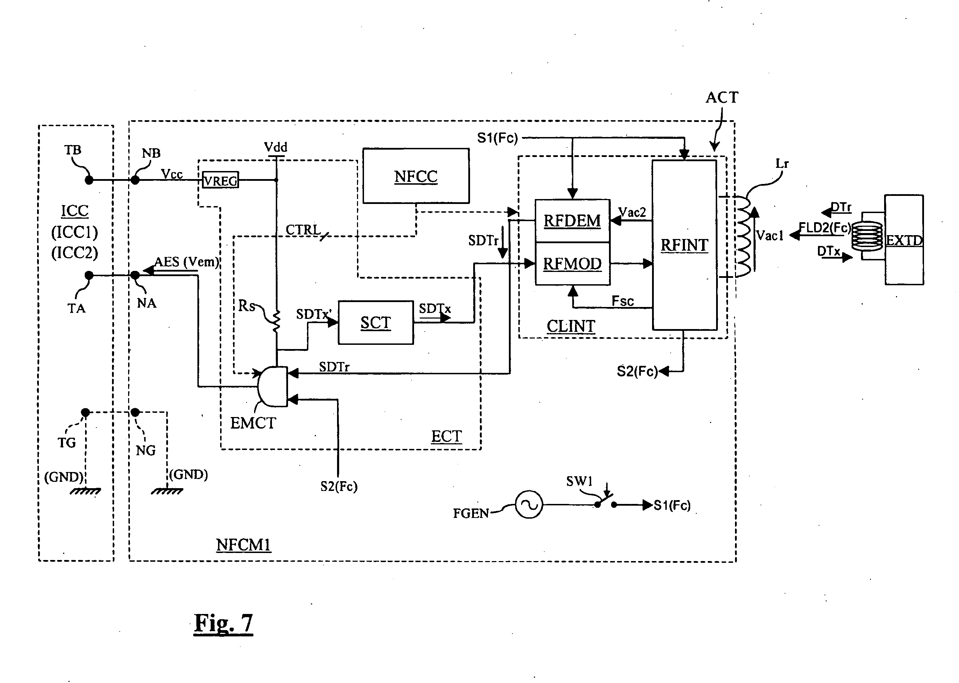

La figure 7 représente un exemple de réalisation du composant NFCM1 prévu pour être compatible avec deux architectures classiques de circuits intégrés sans contact ICC1, ICC2 représentées sur les figures 6A et 6B. Ces deux architectures sont les plus souvent rencontrées dans la production actuelle et seront d'abord décrites, avant de se reporter à la figure 7.

### Architectures de circuits intégrés sans contact

Les circuits intégrés ICC1, ICC2 représentés sur les figures 6A, 6B sont de type passif alimentés par couplage inductif. Ils comportent chacun un circuit d'antenne comprenant une bobine d'antenne La et un condensateur d'accord Ca en parallèle. Le condensateur Ca est généralement intégré sur le substrat semi-conducteur des circuits intégrés tandis que la bobine d'antenne La est un élément externe connecté aux bornes d'antenne TA, TB de chaque circuit intégré. En présence d'un champ magnétique alternatif FLD émis par un lecteur RD1, un signal d'antenne alternatif Sac de fréquence Fc apparaît dans le circuit d'antenne.

Chaque circuit intégré comprend également un interrupteur de rétromodulation SWm, par exemple un transistor interrupteur de type MOS, un circuit modulateur MCT, un circuit démodulateur DMCT, une unité centrale UC (séquenceur à logique câblée ou microprocesseur) et une mémoire MEM.

La mémoire MEM contient un ou plusieurs programmes d'application, notamment un programme pour gérer une application de type AP2 (fig. 2), et reçoit des données d'application. L'unité centrale UC fournit des données sortantes DTx au circuit MCT qui applique à une borne de contrôle de l'interrupteur SWm, par exemple la grille du transistor MOS, un signal SDTx porteur de données DTx. L'interrupteur SWm est connecté aux bornes d'antenne TA, TB et sa fermeture (état passant) provoque un court-circuit partiel aux bornes du circuit d'antenne (court-circuit avec résistance série, par exemple la résistance intrinsèque du transistor MOS) provoquant l'apparition d'un signal de rétromodulation ou modulation de charge dans le circuit d'antenne, au rythme du signal porteur de données SDTx. Suivant les normes ISO-A et ISO-B, le signal SDTx est modulé par un signal de sous-porteuse S(Fsc) oscillant à une fréquence Fsc inférieure à la fréquence Fc du signal d'antenne Sac. Le signal S(Fsc) est fourni au circuit MCT par un diviseur de fréquence DIVF recevant le signal d'antenne Sac.

Le circuit intégré ICC1 se distingue du circuit intégré ICC2 en ce qu'il comprend une diode Dr pour le redressement monoalternance du signal d'antenne Sac, tandis que le circuit intégré ICC2 comprend un pont de diodes Pd pour le redressement bialternance du signal d'antenne Sac.

Dans le circuit intégré ICC1, la diode Dr est connectée en inverse entre la borne d'antenne TA et la masse du circuit intégré. Une tension d'alimentation Vcc apparaît sur la borne TB, par redressement monoalternance, et est lissée par un condensateur Cs connecté entre la borne TB et la masse du circuit intégré.

Dans le circuit intégré ICC2, le pont de diodes Pd comprend une première borne connectée à la borne d'antenne TB, une seconde borne connectée à la borne d'antenne TA, une troisième borne connectée à la masse du circuit intégré ICC2 et une quatrième borne connectée à un condensateur de lissage Cs et fournissant la tension Vcc d'alimentation du circuit intégré.

Dans chaque circuit intégré ICC1, ICC2, le signal d'antenne Sac est présent sur la borne d'antenne TA et celle-ci est ainsi reliée électriquement au circuit démodulateur DMCT pour l'extraction des données entrantes DTr, lesquelles sont ensuite fournies à l'unité centrale UC.

### Aspects principaux du procédé selon l'invention

Pour créer un chemin de données avec l'un des circuits intégrés sans contact ICC1, ICC2 qui viennent d'être décrits, le procédé selon l'invention comprend cinq aspects principaux :
- (1) ne pas connecter la bobine d'antenne La,
- (2) appliquer le signal d'émulation alternatif AES sur la borne d'antenne TA, pour émuler le signal d'antenne Sac,
- (3) appliquer une tension d'alimentation externe Vcc sur la borne d'antenne TB, pour remplacer la tension Vcc extraite du signal d'antenne Sac,
- (4) injecter les données DTr dans le signal d'émulation AES d'une manière appropriée à la technique de démodulation utilisée par le circuit démodulateur DMCT, pour que celui-ci puisse les extraire du signal d'émulation et les fournisse ensuite à l'unité centrale UC,
- (5) extraire les données DTx du signal d'émulation AES d'une manière appropriée à la technique de rétromodulation SDTx utilisée par le circuit modulateur MCT.

Comme indiqué plus haut, l'aspect (3) reste optionnel et ne concerne qu'un circuit intégré passif qui extrait sa tension d'alimentation Vcc du signal d'antenne. De plus, les circuits intégrés sans contact passifs pourraient, à moindre coût, être équipés d'une borne d'alimentation spécifique afin de recevoir une tension d'alimentation par cette borne, au lieu de mettre en oeuvre cet aspect de l'invention, et ce sans préjudice pour la mise en oeuvre des autres aspects de l'invention.

### Exemple de réalisation détaillé du composant NFCM1

Le composant NFCM1 représenté en figure 7 est connecté aux bornes d'antenne TA, TB d'un circuit intégré ICC qui peut être du type à redressement monoalternance (ICC1) ou bialternance (ICC2). Le composant NFCM1 est par ailleurs conçu pour mettre en oeuvre les aspects (4) et (5) du procédé de l'invention dans le cas où les données sont codées conformément aux normes ISO-A ou ISO-B. En d'autres termes, les données DTr sont injectées dans le signal d'émulation AES suivant les recommandations de la norme ISO-A ou celles de la norme ISO-B. De même, les données DTx sont extraites du signal AES suivant les recommandations de l'une ou l'autre de ces normes.

La configuration ISO-A ou ISO-B du composant NFCM1 peut être déterminée en usine ou être déterminée par l'utilisateur, en fonction du type de circuit intégré ICC qu'il insère dans le composant NFCM1 en tant que processeur hôte. Toutefois, comme divers circuits intégrés sans contact sont compatibles ISO-A et ISO-B, la configuration ISO-A ou ISO-B du composant NFCM1 peut aussi être déterminée de façon dynamique par le contrôleur NFCC en fonction du protocole dans lequel une communication avec le dispositif externe EXTD est établie.

### Structure du circuit d'interface sans contact CLINT

Le circuit d'interface sans contact CLINT tel que représenté sur la figure 7 comprend de façon classique un circuit démodulateur RFDEM et un circuit modulateur RFMOD reliés au circuit d'antenne ACT. Ce dernier comprend un étage RFINT connecté à la bobine d'antenne Lr. L'étage RFINT comprend divers éléments classiques de circuit d'antenne ainsi que des commutateurs permettant de contrôler le circuit d'antenne en mode actif ou en mode passif, notamment des interrupteurs de rétromodulation (mode passif) ou de modulation active (mode actif). De même, les circuits RFDEM et RFMOD sont, de façon classique, des circuits duaux qui ne fonctionnent pas de la même manière dans le mode actif et dans le mode passif.

Dans le mode actif, le circuit RFMOD module l'amplitude du signal d'excitation S1(Fc) fourni par le générateur FGEN. Dans le mode passif, le circuit RFMOD reçoit le signal porteur de données SDTx (données sortantes) et applique au circuit d'antenne ACT un signal de rétromodulation correspondant.

Dans le mode actif, le circuit RFDEM détecte et démodule un signal de rétromodulation présent dans le circuit d'antenne ACT. Dans le mode passif, le circuit RFDEM démodule un signal d'antenne Vac1 induit dans la bobine Lr par le champ magnétique FLD2(Fc) généré par le dispositif externe EXTD, et fournit un signal porteur de données SDTr (données entrantes). Plus particulièrement, le circuit RFDEM démodule un signal électrique Vac2 qui est fourni par l'étage RFINT et qui est l'image du signal induit Vac1.

Dans ce qui suit, on supposera que le composant NFCM1 est dans le mode passif lorsque le circuit intégré hôte ICC assure la gestion d'une application sans contact, le composant NFCM1 devenant alors le "prolongement" du circuit intégré pour l'échange de données sans contact, comme cela apparaîtra clairement par la suite.

### Structure du circuit d'interface ECT selon l'invention

Le circuit d'interface ECT tel que représenté sur la figure 7 comprend un circuit modulateur EMCT et un circuit d'extraction de données SCT. Il reçoit directement le signal porteur de données SDTr fourni par circuit démodulateur RFDEM et fournit directement au circuit modulateur RFMOD un signal porteur de données SDTx extrait du signal d'émulation AES. Ainsi, les données transitent ici dans le composant NFCM1 sans être décodées.

### Circuit modulateur EMCT

Le circuit modulateur EMCT reçoit le signal alternatif S2(Fc) fourni par le circuit d'antenne ACT (qui est extrait du signal d'antenne Vac1 par l'étage RFINT) ainsi que le signal porteur de données SDTr, et fournit le signal d'émulation AES à la borne d'antenne TA du circuit intégré ICC.

Le circuit modulateur EMCT injecte les données DTr contenues dans le signal SDTr en modulant l'amplitude du signal AES au moyen du signal SDTr (les données n'étant pas décodées, dans ce mode de réalisation, comme indiqué plus haut). Quand le signal SDTr présente une valeur inactive, par exemple 0, signifiant qu'aucune donnée n'est à transmettre au circuit intégré ICC, le signal AES n'est pas modulé.

La modulation d'amplitude est faite selon le protocole ISO-A ou ISO-B en fonction de signaux de contrôle fournis par le contrôleur NFCC par l'intermédiaire d'un bus de contrôle CTRL (représenté schématiquement en traits pointillés). Le circuit modulateur EMCT est représenté ici schématiquement sous la forme d'une porte ET pour illustrer la fonction de modulation qu'il implémente. En pratique, une simple porte ET ne suffit pas pour réaliser une modulation d'amplitude à 10% (profondeur de modulation) telle que recommandée par la norme ISO-B, mais suffit pour réaliser une modulation d'amplitude à 100% telle que recommandée par la norme ISO-A.

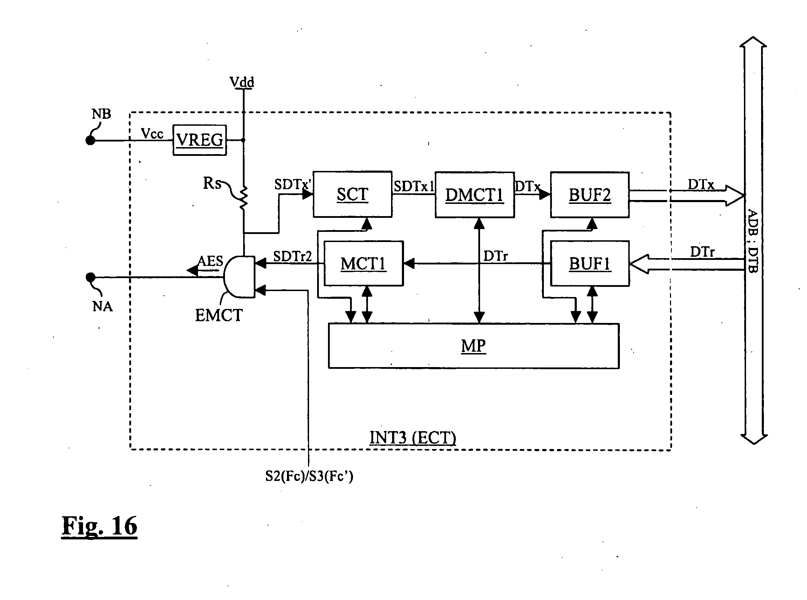

Des exemples de réalisation d'un circuit modulateur compatible ISO-A et ISO-B sont décrits par les brevets EP 1 163 718 et EP 1 163 734 au nom de la demanderesse. Ces brevets décrivent un procédé permettant de moduler l'amplitude d'un signal logique alternatif avec une profondeur de modulation d'amplitude variable, notamment de 100% et de 10%, en utilisant des ports de microprocesseur ayant une résistance série non nulle. Ici, ces ports peuvent être des ports du contrôleur NFCC ou des ports d'un contrôleur spécifique intégré dans le circuit d'interface ECT (Cf. microprocesseur MP, mode de réalisation représenté en figure 16), ou encore des résistances commutables agencées en parallèle, comme cela est également indiqué par les brevets précités.

Il sera toutefois noté que le respect de la norme ISO-B au niveau du signal d'émulation AES n'est pas impératif puisque le signal d'émulation est un signal interne. La profondeur de modulation d'amplitude du signal AES peut donc être déterminée avec un degré de liberté supplémentaire, en tenant compte des caractéristiques électriques du circuit intégré ICC. Par exemple, une modulation d'amplitude du signal AES avec une profondeur de 20% voire de 5% pourrait s'avérer préférable à une modulation à 10%.

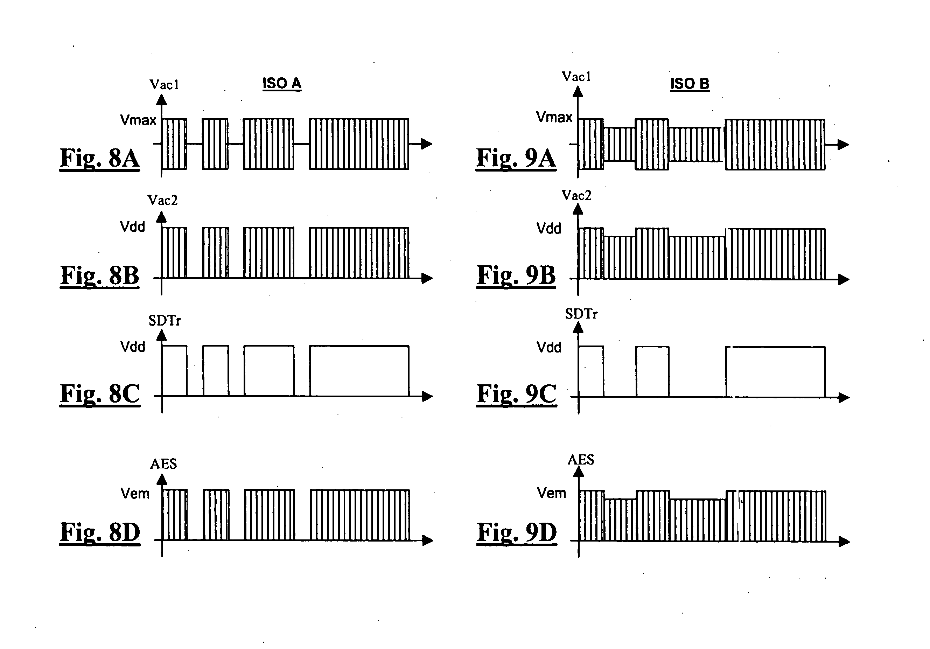

Le fonctionnement du circuit EMCT sera mieux compris en référence aux figures 8A à 8D et 9A à 9D. Les figures 8A, 8B, 8C, 8D représentent respectivement :
- le signal d'antenne Vac1 lorsque des données entrantes DTr sont reçues selon le protocole ISO-A,
- le signal Vac2, image de Vac1,
- le signal porteur de données entrantes SDTr1, et
- le signal d'émulation AES.

Les figures 9A, 9B, 9C, 9D représentent respectivement les mêmes signaux lorsque des données entrantes DTr sont reçues selon le protocole ISO-B.

Sur la figure 8A, les données DTr sont reçues selon un codage dit "Miller modifié" et avec une modulation à 100% de l'amplitude du signal d'antenne Vac1. La tension crête Vmax du signal Vac1 peut atteindre classiquement les 12-16V selon la distance de communication (distance entre le composant NFCM1 et le dispositif externe EXTD). Sur la figure 9A, les données DTr sont reçues selon un codage NRZ ("Non Return to Zero") et une modulation à 10% du signal d'antenne Vac1, la tension crête du signal d'antenne étant identique.

Sur les figures 8B et 9B, le signal Vac2 est l'image du signal Vac1 mais ne présente que des alternances positives. Son amplitude maximale est ramenée à la valeur d'une tension d'alimentation Vdd du composant NFCM1.

Sur les figures 8C ou 9C, le signal porteur de données SDTr fourni par le circuit démodulateur RFDEM est identique à l'enveloppe du signal Vac2, la porteuse Fc ayant été supprimée par le circuit RFDEM.

Sur les figures 8D ou 9D, la forme du signal AES est identique à celle du signal Vac2. En effet le signal AES est ici le résultat du mélange du signal démodulé SDTr avec le signal S2(Fc) qui est ici de même fréquence Fc que le signal Vac2. En d'autres termes, la transformation du signal Vac2 en signal démodulé SDTr est temporaire et le signal Vac2 est reconstitué par le circuit EMCT sur la borne d'antenne TA du circuit intégré hôte ICC. Ce dernier peut ainsi démoduler le signal AES pour retrouver le signal SDTr, puis en extraire les données entrantes DTr qu'il contient, après une étape de décodage Miller modifié ou de décodage NRZ conduite par l'unité centrale UC (fig. 6A, 6B).

Il sera par contre noté que la valeur crête Vem du signal d'émulation est déterminée par le circuit EMCT et est de préférence inférieure à la tension Vdd, pour limiter la consommation électrique du circuit EMCT. Quelques centaines de millivolts suffisent en pratique pour que le signal d'émulation AES soit détecté par le circuit intégré.

### Circuit extracteur SCT

Sur la figure 7, le circuit d'extraction de données SCT extrait du signal d'émulation AES le signal porteur de données SDTx que le circuit intégré applique au signal AES en tant que signal de rétromodulation. Le circuit SCT est par exemple un circuit capteur de tension qui détecte les variations du courant consommé par le circuit EMCT. A cet effet, un signal de variation SDTx' est par exemple prélevé sur la borne d'alimentation du circuit EMCT, et plus précisément sur la cathode d'une résistance Rs par l'intermédiaire de laquelle le circuit EMCT reçoit la tension d'alimentation Vdd du composant NFCM1. Ce signal SDTx' est appliqué au circuit SCT et est ensuite mis en forme sous forme de signal logique formant le signal SDTx, pour être envoyé au circuit modulateur RFMOD. Ainsi, lorsque le circuit intégré ICC applique le signal de modulation SDTx à son interrupteur SWm (fig. 6A ou 6B), le court-circuit résistif causé par les fermetures et ouvertures de l'interrupteur SWm modifie l'impédance de charge vue par le circuit EMCT et modifie le courant consommé par celui-ci, faisant alors varier le signal SDTx'.

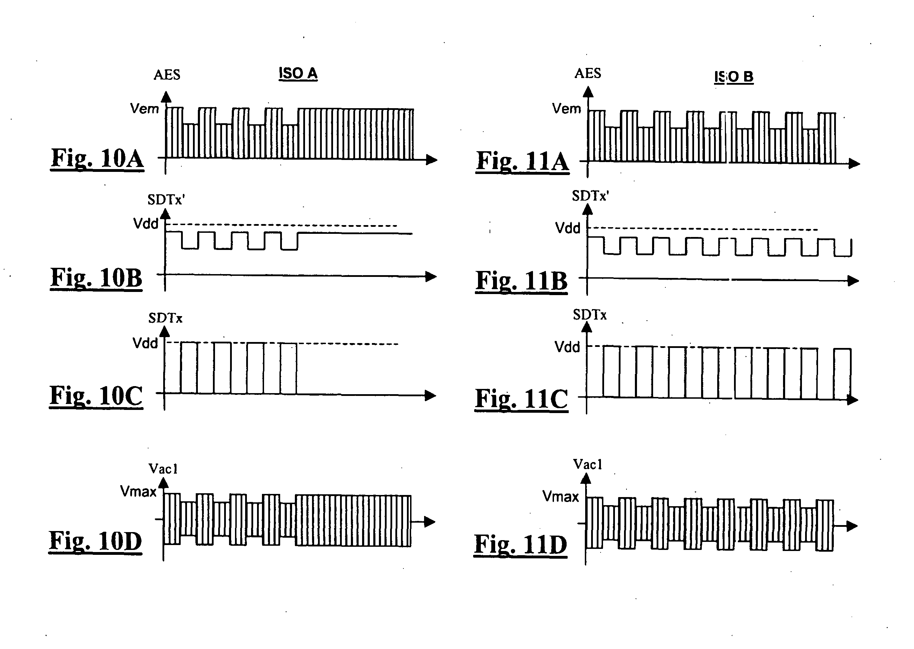

Le fonctionnement du circuit extracteur SCT sera mieux compris en référence aux figures 10A à 10D et 11A à 11D. Les figures 10A, 10B, 10C, 10D représentent respectivement :
- la forme du signal AES lorsque des données sortantes DTx sont émises par le circuit intégré ICC selon le protocole ISO-A,
- le signal SDTx' prélevé sur la borne d'alimentation du circuit EMCT,
- le signal SDTx fourni par le circuit SCT, et
- le signal d'antenne Vac1 apparaissant dans le circuit d'antenne ACT après application du signal SDTx au circuit modulateur RFMOD du circuit d'interface CLINT.

Les figures 11A, 11B, 11C, 11D représentent respectivement les mêmes signaux lorsque des données sortantes DTx sont émises par le circuit intégré ICC selon le protocole ISO-B.

Sur la figure 10A, le signal AES véhicule les données sortantes DTx en étant modulé en amplitude par le signal de sous-porteuse Fsc décrit plus haut, un "1" étant codé par une alternance Fsc/0 (modulation avec la sous-porteuse/pas de modulation) et un "0" étant codé par une alternance inverse 0/Fsc (pas de modulation/modulation avec la sous-porteuse) ou inversement. A noter qu'un seul bit de donnée est représenté sur la figure 10A, dans un souci de simplicité.

Sur la figure 11A, le signal AES véhicule les données sortantes DTx en étant modulé en amplitude en permanence par le signal de sous-porteuse Fsc, les transitions entre un "1" et un "0" étant repérées par des sauts de phase ou des absences de sauts de phase (modulation PSK ou "Phase Shift Keying"). Un seul bit de donnée est également représenté sur la figure 10A dans un souci de simplicité.

Sur les figures 10B et 11B, le signal SDTx' varie en accord avec la modulation d'amplitude du signal AES, pour les raisons exposées plus haut.

Sur les figures 10C, 11C, le signal SDTx est l'image du signal SDTx' mais est mis en forme par le circuit SCT pour présenter des états logiques francs, à savoir 1 (Vdd) et 0 (masse), tandis que signal SDTx' varie entre deux niveaux de tension compris entre 0 et Vdd.

Sur les figures 10D, 11D, le signal d'antenne induit par le champ magnétique FLD2 est modulé par le circuit RFMOD conformément au signal SDTx, et présente ainsi des variations d'amplitude de son enveloppe recopiant la forme du signal SDTx, à savoir en figure 10D des périodes de variation d'enveloppe au rythme de la sous-porteuse Fsc suivies d'absence de variation d'enveloppe et en figure 11D une variation d'enveloppe permanente au rythme de la sous-porteuse Fsc présentant des sauts de phase.

Ainsi, le signal d'antenne Vac1 reproduit les modulations du signal d'émulation AES et est modulé comme si le circuit intégré hôte ICC contrôlait directement le circuit d'antenne ACT au moyen de son propre circuit modulateur MCT, sans passer par le circuit d'interface ECT selon l'invention et sans utiliser le circuit modulateur RFMOD du circuit d'interface CLINT.

### Aspect de l'invention concernant l'alimentation électrique du circuit intégré hôte

La figure 7 illustre également la mise en oeuvre de l'aspect (3) du procédé de l'invention. Le composant NFCM1 comprend ici un circuit régulateur de tension VREG alimenté par la tension Vdd, dont la sortie fournit à la borne d'antenne TB du circuit intégré ICC, via la borne de connexion NB du composant NFCM1, une tension d'alimentation Vcc adaptée au circuit intégré. La tension Vcc est par exemple de 1,5 V ou de 3 V et la tension Vdd est par exemple de 3V ou de 5V.

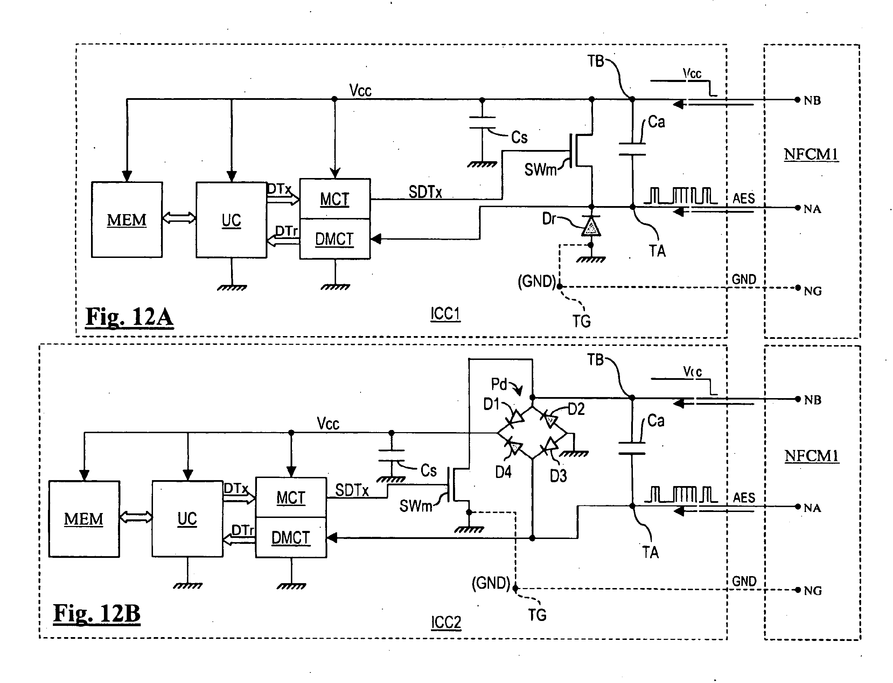

La compatibilité de cet aspect de l'invention avec les circuits intégrés ICC1, ICC2 des figures 6A et 6B peut être vérifiée en se référant aux figures 12A, 12B qui représentent respectivement les circuits intégrés ICC1 et ICC2 connectés au composant NFCM1 de la figure 7 (représenté ici sous la forme d'un bloc).

Sur la figure 12A, il apparait que la tension Vcc fournie par le composant NFCM1 va directement dans la ligne d'alimentation du circuit intégré ICC1. Par ailleurs, la diode Dr est polarisée en inverse et ne fait pas obstacle à l'application du signal AES à l'entrée du circuit démodulateur DMCT du circuit intégré ICC1. Des essais et simulations ont montré que les potentiels de masse respectifs du composant NFCM1 et du circuit intégré ICC1 s'équilibrent à travers la circuiterie du circuit intégré (unité centrale UC, circuits MCT, DMCT, mémoire MEM, etc.). Ainsi, la connexion de la borne de masse NG du composant NFCM1 et du contact de masse TG du circuit intégré ICC1 n'est pas indispensable, bien que pouvant améliorer les performances du circuit intégré dans certains cas, selon la structure et la technologie de fabrication du circuit intégré ICC1.

Sur la figure 12B, il apparait également que la tension Vcc fournie par le composant NFCM1 va dans la ligne d'alimentation du circuit intégré ICC2 par l'intermédiaire d'une diode D1 du pont de diodes Pd, qui est passante. Par ailleurs des diodes D2 et D4 du pont de diodes sont polarisées en inverse et ne font pas obstacle à l'application du signal AES à l'entrée du circuit démodulateur DMCT du circuit intégré ICC2. Des essais et simulations ont également montré que les potentiel de masse respectifs du composant NFCM1 et du circuit intégré ICC1 s'équilibrent à travers la circuiterie du circuit intégré et qu'une diode D3 du pont de diodes contribue à cet équilibrage. Ainsi, comme précédemment, la connexion de la borne de masse NG du composant NFCM1 et du contact de masse du circuit intégré ICC2 n'est pas indispensable, bien que pouvant améliorer les performances du circuit intégré dans certains cas.

### Variantes de réalisation du composant NFC selon l'invention

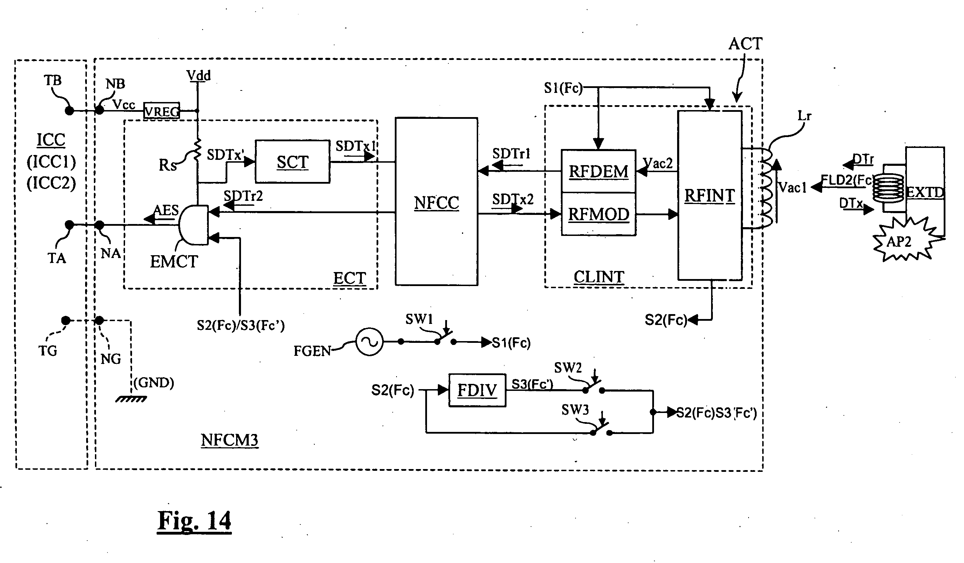

Le mode de réalisation du composant NFCM1 tel que représenté sur la figure 7 est un mode de réalisation élémentaire où le composant NFCM1 est entièrement transparent par rapport au flux de données entrantes et sortantes et aucun moyen de liaison du circuit d'interface CLINT avec un autre processeur hôte n'est représenté, ni aucun moyen de communication entre le circuit intégré hôte ICC et le contrôleur NFCC. On décrira maintenant en relation avec les figures 14 à 16 des variantes de réalisation du composant NFC selon l'invention qui offrent tout ou partie de ces avantages, ainsi que divers autres avantages qui apparaîtront par la suite.

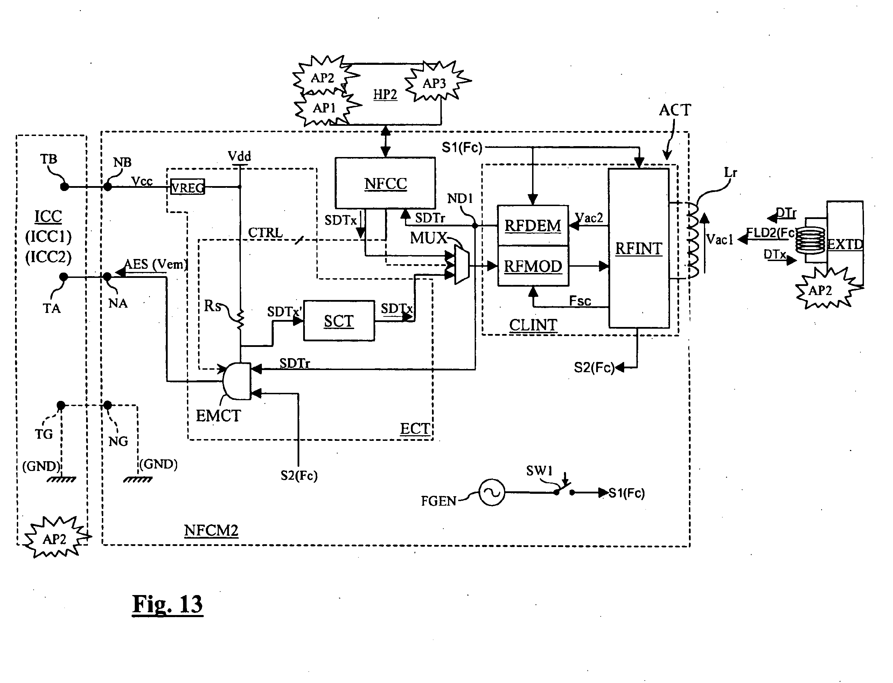

### Variante 1, figure 13

Sur la figure 13, le composant NFC, désigné "NFCM2", est prévu pour recevoir un autre processeur hôte HP2. Il permet d'établir une communication entre d'une part le dispositif externe EXTD et d'autre part le circuit intégré hôte ICC ou le processeur hôte HP2.

La conduite de l'application concernée, par exemple une application de type AP2, peut par exemple être confiée au circuit intégré ICC si celui-ci est sécurisé et si l'application est payante ou nécessite des conditions d'accès à sécuriser (souscription par exemple). La conduite de l'application peut également être confiée au processeur HP2 si celui-ci n'est pas sécurisé et si l'application est gratuite et sans condition d'accès sécurisée. Le processeur HP2 peut également être utilisé pour gérer des applications de type AP1 ou AP3 (fig. 2).

A cet effet, le signal SDTx porteur de données sortantes DTx tel qu'appliqué au circuit RFMOD peut être fourni par le processeur HP2, par exemple via le contrôleur NFCC, ou par le circuit intégré ICC, via le circuit d'interface ECT. Afin d'éviter des courts-circuits entre potentiels électriques, un multiplexeur MUX relie l'entrée du circuit RFMOD à la fois au contrôleur NFCC et au circuit d'interface ECT et assure l'acheminement du signal SDTx. Le multiplexeur MUX est piloté par le contrôleur NFCC au moyen du bus de contrôle CTRL.

De même, le signal SDTr porteur de données entrantes DTr fourni par le circuit RFDEM est appliqué à la fois au contrôleur NFCC et au circuit d'interface ECT, au moyen d'un noeud de dérivation ND1, ce qui permet de router les données DTr vers le processeur hôte HP2 ou vers le circuit intégré ICC. Dans le premier cas le circuit ECT est désactivé par le contrôleur NFCC, au moyen du bus de contrôle CTRL, et le signal porteur de données SDTr est traité par le contrôleur NFCC ou envoyé directement au processeur hôte HP2. Dans le second cas le circuit ECT est activé et le signal SDTr n'est pas traité par le contrôleur NFCC.

### Variante 2, figure 14

Sur la figure 14 le composant NFC, désigné "NFCM3", se distingue du composant NFCM1 en ce que le contrôleur NFC est interposé dans le flux de données entrantes et sortantes. Le signal porteur de données entrantes fourni par le circuit démodulateur RFDEM au contrôleur NFCC est désigné SDTr1 tandis que le signal porteur de données entrantes fourni par le contrôleur NFCC au circuit d'interface ECT est désigné SDTr2. De même, le signal porteur de données sortantes fourni par le circuit d'interface ECT au contrôleur NFCC est désigné SDTx1 et signal porteur de données sortantes fourni par le contrôleur NFCC au circuit modulateur RFMOD est désigné SDTx2.

Le signal SDTr1 peut être traité ou non par le contrôleur NFCC. Si le contrôleur NFCC renvoie le signal SDTr1 tel quel au circuit d'interface ECT (SDTr2=SDTr1), le mode de fonctionnement obtenu est alors identique à celui de la figure 7 (composant NFCM3 transparent vis à vis du circuit intégré hôte). Le contrôleur NFCC peut également traiter ce signal en le décodant, et le régénérer avec un autre codage. Dans ce cas, le contrôleur NFCC permet de convertir le protocole de communication. Par exemple, le circuit d'antenne ACT reçoit des données en mode ISO-A et le processeur les répercute au circuit d'interface ECT en mode ISO-B, ou vice-versa. Egalement, le contrôleur NFCC peut transférer le signal SDTr1 à un autre processeur hôte HP2 (non représenté ici, cf. figure 13). Enfin, le contrôleur NFCC peut aussi générer le signal SDTr2 à partir de données qu'il souhaite envoyer au circuit intégré hôte, sans recevoir lui-même le signal SDTr1. Dans ce cas, une communication interne s'établit entre le contrôleur NFCC et le circuit intégré hôte, sans communication avec le monde extérieur.

Des possibilités de traitement similaires sont offertes par le composant NFCM3 en ce qui concerne le signal porteur de données sortantes. Le signal SDTx1 peut être traité ou non par le contrôleur NFCC. Si le contrôleur NFCC renvoie le signal SDTx1 tel quel au circuit modulateur RFMOD (SDTx2=SDTx1), le mode de fonctionnement obtenu est identique à celui de la figure 7. Si le contrôleur NFCC traite ce signal en le décodant et en le régénérant avec un autre codage, le contrôleur NFCC assure alors une conversion du protocole de communication. Egalement, le contrôleur NFCC peut recevoir un signal porteur de données sortantes émis par un autre processeur hôte HP2 (non représenté ici, cf. figure 13) et l'appliquer au circuit d'interface RFINT. Le contrôleur NFCC peut aussi générer le signal SDTx2 à partir de données qu'il souhaite envoyer à un dispositif externe EXTD, sans recevoir le signal SDTx1. Dans ce cas, une communication externe s'établit entre le contrôleur NFCC et le dispositif externe EXTD, sans participation du circuit intégré hôte ICC.

Outre une conversion de protocole, l'invention permet également de réaliser une conversion de la fréquence de travail du composant NFCM3 relativement à la fréquence de travail du circuit intégré hôte ICC. A cet effet, le circuit modulateur EMCT du circuit d'interface ECT reçoit un signal S3(Fc') présentant une fréquence Fc' différente de la fréquence de travail Fc du circuit d'antenne ACT du composant NFCM3. Comme représenté schématiquement sur la figure 14, un diviseur de fréquence FDIV recevant le signal S2(Fc) fournit le signal S3(Fc'). Des interrupteurs SW2, SW3 pilotés par le contrôleur NFCC permettent d'appliquer au circuit modulateur EMCT l'un ou l'autre de ces signaux.

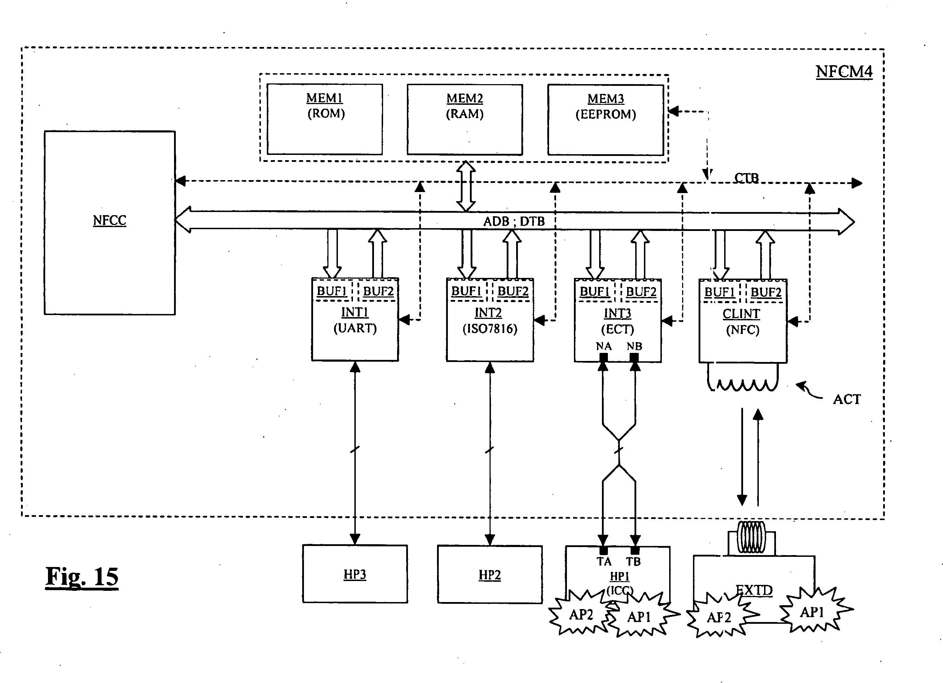

### Variante 3, figures 15 et 16

Le mode de réalisation représenté en figure 15 du composant NFC selon l'invention, désigné "NFCM4", forme une entité de type informatique dans laquelle des données circulent sur un bus de données DTB associé à un bus d'adresse ADB, les bus de donnée et d'adresse étant contrôlés par le contrôleur NFCC. Dans ce mode de réalisation, le circuit d'interface ECT selon l'invention est un organe périphérique du contrôleur NFCC.

Le composant NFCM4 comprend plus particulièrement :
- le contrôleur NFCC et le circuit d'interface CLINT déjà décrits,
- un plan mémoire comprenant par exemple une mémoire programme MEM1 (mémoire ROM), une mémoire de données volatile MEM2 (RAM) et une mémoire de données MEM3 effaçable et programmable électriquement (EEPROM),
- un port de communication INT1 de type UART, auquel un processeur hôte HP3 peut être connecté,
- un port de communication INT2 de type ISO 7816 auquel un processeur hôte HP2 peut être connecté (par exemple une carte SIM),
- un port de connexion INT3/ECT selon l'invention permettant de connecter le circuit intégré ICC,
- le bus de données DTB et le bus d'adresse ADB précités, reliant le plan mémoire, le contrôleur NFCC, le circuit d'interface CLINT et les ports INT1, INT2, INT3, et
- un bus de contrôle CTB permettant au contrôleur NFCC de contrôler et d'accéder à ces divers éléments en lecture et/ou écriture.

L'interface CLINT et les ports INT1, INT2, INT3 comportent chacun un tampon d'entrée BUF1 à entrée parallèle et un tampon de sortie BUF2 à sortie parallèle accessible en écriture, respectivement en lecture, via le bus de données et le bus d'adresse. L'échange de données formant des commandes de routage ou les trames de données entre les processeurs hôtes HP1, HP2, HP3, le circuit d'interface CLINT et le contrôleur NFCC s'effectue ainsi par blocs de données de la taille des tampons BUF1, BUF2.

Un exemple de réalisation du circuit d'interface INT3/ECT est représenté sur la figure 15. Le circuit INT3/ECT comprend un microprocesseur MP, un circuit modulateur MCT1 et un circuit démodulateur DMCT1 en sus des éléments EMCT, SCT, BUF1, BUF1 déjà décrits. Le circuit modulateur MCT1 a une entrée reliée à la sortie du tampon BUF1 et une sortie reliée à l'entrée du circuit modulateur EMCT. Cette sortie fournit le signal porteur de données entrantes SDTr2 à partir de données entrantes DTr présentes dans le tampon BUF1, reçues via le bus de données DTB. Le circuit démodulateur DMCT a une entrée reliée à la sortie du circuit SCT et une sortie reliée à une entrée du tampon BUF2. L'entrée du circuit DMCT reçoit le signal porteur de données sortantes SDTx1 et la sortie de ce circuit fournit au tampon BUF2 des données décodées DTx, pour qu'elles soient envoyées sur le bus de données. Le microprocesseur MP contrôle les circuits MCT1 et DMCT1 et peut les désactiver si les données entrantes DTr sont déjà reçues codées sous forme de signal SDTr et si le signal SDTx doit être envoyé sur le bus sans décodage. Le microprocesseur MP reçoit lui-même des commandes du contrôleur NFCC permettant de configurer le circuit d'interface INT3/ECT de la façon souhaitée (mode codage/décodage, mode transparent).

Dans ce mode de réalisation, le circuit INT3/ECT est ainsi fonctionnellement indépendant du contrôleur NFCC en ce qui concerne l'injection et l'extraction de données du signal d'émulation. Les données qu'il reçoit ou qu'il émet peuvent être codées sous forme de signal porteur de données, comme décrit plus haut (ce signal étant vu comme des données pour son transport via le bus de données) ou n'être pas codées. Dans ce cas, les données entrantes DTr reçues via le bus de données sont transformées en signal SDTr pour leur application au circuit intégré hôte ICC. De même, le signal SDTx extrait par le circuit d'interface INT3/ECT est décodé et envoyé sur le bus sous forme de données DTx, à l'attention du contrôleur NFCC, qui génère ensuite lui-même le signal porteur de données sortantes SDTx et l'applique au circuit d'interface CLINT via le bus de données.

Ce mode de réalisation présente ainsi toutes les caractéristiques des autres modes de réalisation. Les flux de données internes peuvent être codés ou non, des changements de protocole peuvent être prévus ou non. Des chemins de données peuvent être établis entre le dispositif externe EXTD et chacun des processeurs hôtes et des chemins de données internes peuvent être établis entre le contrôleur NFCC et chacun des processeurs hôtes, etc.

Ce mode de réalisation permet également de configurer le composant NFCM4 dans le mode actif pendant que le circuit intégré hôte ICC dialogue avec le dispositif externe EXTD, qui est alors en mode passif. Cela permet de conférer à un circuit intégré sécurisé passif tel le circuit intégré ICC la possibilité de dialoguer avec des dispositifs externes également passifs, par exemple pour contrôler des applications de type AP1 (Cf. figure 2) dans lesquelles l'accès à l'information contenue par le dispositif externe passif doit être sécurisé. Le dispositif externe EXTD est par exemple une carte à puce sans contact formant un porte-monnaie électronique que l'utilisateur souhaite recharger en unités monétaires au moyen de son téléphone mobile, après avoir obtenu l'autorisation de sa banque via le processeur hôte HP3 (base band), l'opération de rechargement du porte-monnaie étant sous le contrôle du circuit intégré hôte ICC.

Il apparaitra clairement à l'homme de l'art que la présente invention est susceptible de diverses autres variantes, en combinant tout ou partie des caractéristiques mises en oeuvre dans chacune des variantes de réalisation décrites dans ce qui précède.

Il apparaitra également à l'homme de l'art que la présente invention n'est pas réservée aux circuits intégrés RF fonctionnant par couplage inductif. L'invention est applicable à d'autres types de circuits intégrés sans contact, notamment des circuits intégrés sans contact UHF fonctionnant par couplage électrique, prévus pour recevoir une antenne UHF et comprenant des moyens de rétromodulation agencés pour moduler l'impédance de l'antenne UHF afin de moduler son coefficient de réflexion. L'interface de communication du composant NFC peut également être de type UHF au lieu d'être à couplage inductif. De façon générale, l'invention permet d'accueillir un circuit intégré UHF ou un circuit intégré RF dans un composant NFC ayant une interface de communication RF à couplage inductif ou d'accueillir un circuit intégré UHF ou un circuit intégré RF dans un composant NFC ayant une interface de communication UHF à couplage électrique.

## Revendications

1. Procédé pour établir un chemin de données entre un circuit intégré hôte (ICC) et un composant NFC (NFCM1) comprenant un circuit d'antenne (ACT) pour la réception et l'émission de données sans contact,
procédé **caractérisé en ce que** le circuit intégré hôte (ICC) comprend des bornes de connexion d'antenne (TA, TB) et des moyens (MCT, DMCT, SWm) pour recevoir et émettre des données en démodulant un signal d'antenne (Sac) reçu sur les bornes de connexion d'antenne,
et **en ce qu'**il comprend des étapes consistant à :
- ne pas connecter à une antenne (La) les bornes de connexion d'antenne (TA, TB) du circuit intégré hôte,
- relier au moins une première (TA) des bornes de connexion d'antenne (TA, TB) du circuit intégré hôte au composant NFC (NFCM1, NA) au moyen d'une liaison filaire (NA-TA),
- appliquer un signal d'émulation alternatif (AES) fourni par le composant NFC au moins à la première (NA) borne de connexion d'antenne, de manière à émuler la présence d'un signal d'antenne (Sac),
- injecter dans le signal d'émulation (AES) des données (DTr) fournies par le composant NFC, et
- prélever dans le signal d'émulation (AES) des données (DTx) émises par le circuit intégré hôte et les fournir au composant NFC.

2. Procédé selon la revendication 1, dans lequel l'étape d'injection de données (DTr) dans le signal d'émulation (AES) comprend une étape de modulation du signal d'émulation (AES) au moyen d'un signal porteur de données (SDTr1, SDTr2).

3. Procédé selon la revendication 2, comprenant une étape consistant à produire le signal porteur de données (SDTr1) en démodulant (RFDEM) un signal d'antenne (Vac1) reçu dans le circuit d'antenne (ACT) du composant NFC de manière que des données reçues par le composant NFC soient répercutées au circuit intégré hôte de façon transparente.

4. Procédé selon la revendication 1, dans lequel l'étape d'injection de données (DTr) dans le signal d'émulation (AES) comprend des étapes consistant à :
- démoduler (RFDEM) un signal d'antenne (Vac1) reçu dans le circuit d'antenne (ACT) du composant NFC pour produire un premier signal porteur de données (SDTr1),
- décoder le premier signal porteur de données (SDTr1),
- reconstruire un second signal porteur de données (SDTr2) à partir de données (DTr) présentes dans le premier signal porteur de données (SDTr1), et
- moduler le signal d'émulation (AES), au moyen du second signal porteur de données (SDTr2).

5. Procédé selon la revendication 4, dans lequel le second signal porteur de données (SDTr2) présente un codage différent d'un codage du premier signal porteur de données (SDTr1).

6. Procédé selon l'une des revendications 1 à 5, dans lequel l'étape de prélèvement de données (DTx) dans le signal d'émulation (AES) comprend une étape d'extraction d'un signal de rétromodulation (SDTx', SDTx, SDTx1) porteur de données (DTx), par détection de variations de courant ou de tension dans le signal d'émulation (AES).

7. Procédé selon la revendication 6, comprenant une étape consistant à appliquer le signal de rétromodulation (SDTx) à un circuit modulateur (RFMOD) du composant NFC, pour que le composant NFC réémette les données via le circuit d'antenne (ACT) de façon transparente.

8. Procédé selon l'une des revendications 1 à 7, dans lequel l'étape de prélèvement de données (DTx) dans le signal d'émulation (AES) comprend des étapes consistant à :
- extraire du signal d'émulation (AES) un premier signal de rétromodulation (SDTx1) porteur de données (DTx),
- décoder le premier signal de rétromodulation (SDTx1),
- reconstruire un second signal de rétromodulation (SDTx2) à partir de données (DTx) présentes dans le premier signal de rétromodulation (SDTx1), et
- appliquer le second signal de rétromodulation (SDTx2) à un circuit modulateur (RFMOD) pour émettre les données via le circuit d'antenne (ACT) du composant NFC.

9. Procédé selon la revendication 8, dans lequel le second signal de rétromodulation (SDTx2) présente un codage différent d'un codage du premier signal porteur de données sortantes (SDTx1).

10. Procédé selon l'une des revendications 1 à 9, dans lequel le signal d'émulation (AES) oscille à la même fréquence (Fc) qu'une fréquence de travail (Fc) du circuit d'antenne (ACT) du composant NFC.

11. Procédé selon l'une des revendications 1 à 9, dans lequel le signal d'émulation (AES) oscille à une fréquence (Fc') différente d'une fréquence de travail (Fc) du circuit d'antenne (ACT) du composant NFC.

12. Procédé selon l'une des revendications 1 à 11, comprenant une étape consistant à extraire un signal alternatif (S2(Fc)) du circuit d'antenne (ACT), et à utiliser le signal alternatif (S2(Fc)) comme signal d'émulation (AES).

13. Procédé selon la revendication 12, comprenant une étape consistant à configurer le composant NFC pour qu'il comprenne un mode de fonctionnement actif où le composant NFC applique un signal d'excitation (S1(Fc)) au circuit d'antenne (ACT) et un mode de fonctionnement passif où le composant NFC extrait le signal alternatif (S2(Fc)) du circuit d'antenne.

14. Procédé selon l'une des revendications 1 à 13, comprenant des étapes consistant à :
- relier une seconde (TB) des bornes de connexion d'antenne (TA, TB) au composant NFC (NFCM1, NB) au moyen d'une liaison filaire (NB-TB), et
- appliquer une tension continue (Vcc) à la seconde borne de connexion d'antenne (NB), pour alimenter électriquement le circuit intégré hôte.

15. Procédé selon l'une des revendications 1 à 14, comprenant une étape consistant à relier une borne de masse (TG) du circuit intégré hôte à une borne de masse (NG) du composant NFC.

16. Composant NFC comprenant un circuit d'antenne (ACT, Lr) pour la réception et l'émission de données sans contact, et prévu pour recevoir au moins un circuit intégré hôte (ICC) afin d'échanger des données avec le circuit intégré hôte, **caractérisé en ce qu'**il comprend :
- au moins une borne de connexion (NA) pour connecter une borne de connexion d'antenne (TA) d'un circuit intégré hôte du type fonctionnant sans contact (ICC) mais dépourvu d'antenne (La), et
- un circuit d'interface (ECT, INT3) pour :
- appliquer à la borne de connexion d'antenne (TA) du circuit intégré hôte un signal d'émulation alternatif (AES), de manière à émuler la présence d'un signal d'antenne,
- injecter dans le signal d'émulation (AES) des données (DTr) fournies par le composant NFC, et
- prélever dans le signal d'émulation (AES) des données (DTx) émises par le circuit intégré hôte.

17. Composant NFC selon la revendication 16, dans lequel le circuit d'interface (ECT, INT3) est agencé pour injecter des données (DTr) dans le signal d'émulation (AES) en modulant le signal d'émulation (AES) au moyen d'un signal porteur de données (SDTr1, SDTr2).

18. Composant NFC selon la revendication 17, comprenant un démodulateur (RFDEM) pour démoduler un signal d'antenne (Vac1) reçu dans le circuit d'antenne (ACT) et dans lequel le signal porteur de données (SDTr1) est fourni au circuit d'interface (ECT) sans traitement de manière que des données reçues via le circuit d'antenne (ACT) soient répercutées au circuit intégré hôte de façon transparente.

19. Composant NFC selon la revendication 17, comprenant :
- un démodulateur (RFDEM) pour démoduler un signal d'antenne (Vac1) reçu dans le circuit d'antenne (ACT) et fournir un premier signal porteur de données (SDTr1) au circuit d'interface,
- des premiers moyens de traitement (NFCC, MCT1, UC) pour reconstruire un seconde signal porteur de données (SDTr2) à partir de données (DTr) présentes dans le premier signal porteur de données (SDTr1), et
- un circuit modulateur (MCT) pour moduler le signal d'émulation (AES) au moyen du second signal porteur de données (SDTr2). -

20. Composant NFC selon la revendication 19, dans lequel les premiers moyens de traitement (NFCC, MCT1, UC) reconstruisent le second signal porteur de données (SDTr2) avec un codage différent d'un codage du premier signal porteur de données (SDTr1).

21. Composant NFC selon les revendications 19 et 20, dans lequel les premiers moyens de traitement comprennent un contrôleur principal (NFCC) du composant NFC.

22. Composant NFC selon l'une des revendications 19 et 20, dans lequel les premiers moyens de traitement comprennent un circuit modulateur dédié (MCT1) du circuit d'interface (INT3): distinct d'un contrôleur principal (NFCC) du composant NFC.

23. Composant NFC selon l'une des revendications 16 à 22, dans lequel le circuit d'interface (ECT, INT3) comprend un circuit détecteur (SCT) pour détecter des variations de courant ou de tension dans le signal d'émulation (AES) et extraire du signal d'émulation (AES) un signal de rétromodulation (SDTx', SDTx, SDTx1) porteur de données (DTx).

24. Composant NFC selon la revendication 23, comprenant un circuit modulateur (RFMOD) pour émettre des données via le circuit d'antenne (ACT), et dans lequel le signal de rétromodulation (SDTx) est appliqué au circuit modulateur (RFMOD) sans traitement pour que le composant NFC réémette les données via le circuit d'antenne (ACT) de façon transparente.

25. Composant NFC selon la revendication 23 comprenant :
- des seconds moyens de traitement (NFCC, DMCT1, UC) pour reconstruire un second signal de rétromodulation (SDTx2) à partir de données (DTx) présentes dans le premier signal de rétromodulation (SDTx1), et
- un circuit modulateur (RFMOD) pour appliquer le second signal de rétromodulation (SDTx2) au circuit d'antenne (ACT) et émettre les données via le circuit d'antenne (ACT) du composant NFC.

26. Composant NFC selon la revendication 25, dans lequel les seconds moyens de traitement (NFCC, DMCT1, UC) reconstruisent le second signal porteur de données (SDTx2) avec un codage différent d'un codage du premier signal porteur de données (SDTx1).

27. Composant NFC selon las revendications 25 et 26, dans lequel les seconds moyens de traitement comprennent un contrôleur principal (NFCC) du composant NFC.

28. Composant NFC selon les revendications 25 et 26, dans lequel les seconds moyens de traitement comprennent un circuit démodulateur dédié (DMCT1) du circuit d'interface (INT3), distinct d'un contrôleur principal (NFCC) du composant NFC, pour extraire les données présentes dans le premier signal de rétromodulation (SDTx1).

29. Composant NFC selon l'une des revendications 16 à 28, dans lequel le signal d'émulation (AES) oscille à la même fréquence (Fc) qu'une fréquence de travail (Fc) du circuit d'antenne du composant NFC.

30. Composant NFC selon l'une des revendications 16 à 28, dans lequel le signal d'émulation (AES) oscille à une fréquence (Fc') différente d'une fréquence de travail (Fc) du circuit d'antenne du composant NFC.

31. Composant NFC selon l'une des revendications 16 à 30, comprenant des moyens (RFINT) pour extraire un signal alternatif (S2(Fc)) du circuit d'antenne (ACT), et dans lequel le circuit d'interface (ECT, INT3) utilise le signal alternatif (S2(Fc)) extrait du circuit d'antenne (ACT) comme signal d'émulation (AES).

32. Composant NFC selon la revendication 31, comprenant un mode de fonctionnement actif où le composant NFC applique un signal d'excitation (S1(Fc)) au circuit d'antenne (ACT) et un mode de fonctionnement passif où le composant NFC extrait le signal alternatif (S2(Fc)) du circuit d'antenne.

33. Composant NFC selon l'une des revendications 16 à 32, comprenant :
- une seconde borne de connexion (NB) pour connecter une seconde (TB) des bornes de connexion d'antenne (TA, TB) du circuit intégré hôte, et
- des moyens (VREF) pour appliquer une tension continue (Vcc) à la seconde borne de connexion d'antenne (NB), pour alimenter électriquement le circuit intégré hôte.

34. Composant NFC selon l'une des revendications 16 à 33, comprenant une borne de masse (NG) pour connecter une borne de masse (TG) du circuit intégré hôte à un circuit de masse du composant NFC.

## Claims

1. Method for establishing a data path between a host integrated circuit (ICC) and a NFC component (NFCM1) comprising an antenna circuit (ACT) for contactless data reception and emission,
method **characterised in that** the host integrated circuit (ICC) comprises antenna connection terminals (TA, TB) and means (MCT, DMCT, SWm) for receiving and emitting data by demodulating an antenna signal (Sac) received on the antenna connection terminals,
and **characterised in that** it comprises:
- not connecting to an antenna (La) the antenna connection terminals (TA, TB) of the host integrated circuit,
- linking at least one first (TA) antenna connection terminal (TA, TB) of the host integrated circuit to the NFC component (NFCM1, NA) by means of a wire link (NA-TA),
- applying an alternating emulation signal (AES) supplied by the NFC component at least to the first (NA) antenna connection terminal, so as to emulate the presence of an antenna signal (Sac),
- injecting into the emulation signal (AES) data (DTr) supplied by the NFC component, and
- taking from the emulation signal (AES) data (DTx) emitted by the host integrated circuit and supply them to the NFC component.

2. Method according to claim 1, wherein injecting data (DTr) into the emulation signal (AES) comprises modulating the emulation signal (AES) by means of a data carrier signal (SDTr1, SDTr2).

3. Method according to claim 2, comprising producing the data carrier signal (SDTr1) by demodulating (RFDEM) an antenna signal (Vac1) received in the antenna circuit (ACT) of the NFC component so that the data received by the NFC component are passed on to the host integrated circuit in a transparent way.

4. Method according to claim 1, wherein injecting data (DTr) into the emulation signal (AES) comprises:
- demodulating (RFDEM) an antenna signal (Vac1) received in the antenna circuit (ACT) of the NFC component to produce a first data carrier signal (SDTr1),
- decoding the first data carrier signal (SDTr1),
- reconstructing a second data carrier signal (SDTr2) from data (DTr) present in the first data carrier signal (SDTr1), and
- modulating the emulation signal (AES), by means of the second data carrier signal (SDTr2).

5. Method according to claim 4, wherein the second data carrier signal (SDTr2) has an encoding different from an encoding of the first data carrier signal (SDTr1) .

6. Method according to one of claims 1 to 5, wherein taking data (DTx) from the emulation signal (AES) comprises extracting a data carrier (DTx) retromodulation signal (SDTx', SDTx, SDTx1), by detecting current or voltage variations in the emulation signal (AES).

7. Method according to claim 6, comprising applying the retromodulation signal (SDTx) to a modulator circuit (RFMOD) of the NFC component, so that the NFC component re-emits the data via the antenna circuit (ACT) in a transparent way.

8. Method according to one of claims 1 to 7, wherein taking data (DTx) from the emulation signal (AES) comprises:
- extracting from the emulation signal (AES) a first data carrier (DTx) retromodulation signal (SDTx1)
- decoding the first retromodulation signal (SDTx1),
- reconstructing a second retromodulation signal (SDTx2) from data (DTx) present in the first retromodulation signal (SDTx1), and
- applying the second retromodulation signal (SDTx2) to a modulator circuit (RFMOD) to emit data via the antenna circuit (ACT) of the NFC component.

9. Method according to claim 8, wherein the second retromodulation signal (SDTx2) has an encoding different from an encoding of the first outgoing data carrier signal (SDTx1).

10. Method according to one of claims 1 to 9, wherein the emulation signal (AES) oscillates at the same frequency (Fc) as a working frequency (Fc) of the antenna circuit (ACT) of the NFC component.

11. Method according to one of claims 1 to 9, wherein the emulation signal (AES) oscillates at a frequency (Fc') different from a working frequency (Fc) of the antenna circuit (ACT) of the NFC component.

12. Method according to one of claims 1 to 11, comprising extracting an alternating signal (S2(Fc)) of the antenna circuit (ACT), and using the alternating signal (S2(Fc)) as emulation signal (AES).

13. Method according to claim 12, comprising configuring the NFC component so that it comprises an active operating mode where the NFC component applies a triggering signal (S1(Fc)) to the antenna circuit (ACT) and a passive operating mode where the NFC component extracts the alternating signal (S2(Fc)) from the antenna circuit.

14. Method according to one of claims 1 to 13, comprising:
- linking a second (TB) antenna connection terminal (TA, TB) to the NFC component (NFCM1, NB) by means of a wire link (NB-TB), and
- applying a direct voltage (Vcc) to the second antenna connection terminal (NB), to electrically feed the host integrated circuit.

15. Method according to one of claims 1 to 14, comprising linking a ground terminal (TG) of the host integrated circuit to a ground terminal (NG) of the NFC component.

16. NFC component comprising an antenna circuit (ACT, Lr) for contactless data reception and emission, and provided for receiving at least one host integrated circuit (ICC) so as to exchange data with the host integrated circuit, **characterised in that** it comprises:
- at least one connection terminal (NA) to connect an antenna connection terminal (TA) of a host integrated circuit of the contactless operation type (ICC) but without antenna (La), and
- an interface circuit (ECT, INT3) to:
- apply to the antenna connection terminal (TA) of the host integrated circuit an alternating emulation signal (AES), so as to emulate the presence of an antenna signal,
- inject into the emulation signal (AES) data (DTr) supplied by the NFC component, and
- take from the emulation signal (AES) data (DTx) emitted by the host integrated circuit.

17. NFC component according to claim 16, wherein the interface circuit (ECT, INT3) is arranged to inject data (DTr) into the emulation signal (AES) by modulating the emulation signal (AES) by means of a data carrier signal (SDTr1, SDTr2).

18. NFC component according to claim 17, comprising a demodulator (RFDEM) to demodulate an antenna signal (Vac1) received in the antenna circuit (ACT) and wherein the data carrier signal (SDTr1) is supplied to the interface circuit (ECT) without process so that data received via the antenna circuit (ACT) are passed on to the host integrated circuit in a transparent way.

19. NFC component according to claim 17, comprising:
- a demodulator (RFDEM) to demodulate an antenna signal (Vac1) received in the antenna circuit (ACT) and supply a first data carrier signal (SDTr1) to the interface circuit,
- first processing means (NFCC, MCT1, UC) to reconstruct a second data carrier signal (SDTr2) from data (DTr) present in the first data carrier signal (SDTr1), and
- a modulator circuit (MCT) to modulate the emulation signal (AES) by means of the second data carrier signal (SDTr2).

20. NFC component according to claim 19, wherein the first processing means (NFCC, MCT1, UC) reconstruct the second data carrier signal (SDTr2) with an encoding different from an encoding of the first data carrier signal (SDTr1).

21. NFC component according to claims 19 and 20, wherein the first processing means comprise a main controller (NFCC) of the NFC component.

22. NFC component according to one of claims 19 and 20, wherein the first processing means comprise a dedicated modulator circuit (MCT1) of the interface circuit (INT3), different from a main controller (NFCC) of the NFC component.

23. NFC component according to one of claims 16 to 22, wherein the interface circuit (ECT, INT3) comprises a detector circuit (SCT) to detect current or voltage variations in the emulation signal (AES) and extract from the emulation signal (AES) a data carrier (DTx) retromodulation signal (SDTx', SDTx, SDTx1).

24. NFC component according to claim 23, comprising a modulator circuit (RFDOM) to emit data via the antenna circuit (ACT), and wherein the retromodulation signal (SDTx) is applied to the modulator circuit (RFMOD) without process so that the NFC component re-emits data via the antenna circuit (ACT) in a transparent way.

25. NFC component according to claim 23, comprising:
- second processing means (NFCC, DMCT1, UC) to reconstruct a second retromodulation signal (SDTx2) from data (DTx) present in the first retromodulation signal (SDTx1), and
- a modulator circuit (RFMOD) to apply the second retromodulation signal (SDTx2) to the antenna circuit (ACT) and emit the data via the antenna circuit (ACT) of the NFC component.

26. NFC component according to claim 25, wherein the second processing means (NFCC, DMCT1, UC) reconstruct the second data carrier signal (SDTx2) with an encoding different from an encoding of the first data carrier signal (SDTx1).

27. NFC component according to claims 25 and 26, wherein the second processing means comprise a main controller (NFCC) of the NFC component.

28. NFC component according to claims 25 and 26, wherein the second processing means comprise a dedicated demodulator circuit (DMCT1) of the interface circuit (INT3), different from a main controller (NFCC) of the NFC component, to extract the data present in the first retromodulation signal (SDTx1).

29. NFC component according to one of claims 16 to 28, wherein the emulation signal (AES) oscillates at the same frequency (Fc) as a working frequency (Fc) of the antenna circuit (ACT) of the NFC component.

30. NFC component according to one of claims 16 to 28, wherein the emulation signal (AES) oscillates at a frequency (Fc') different from a working frequency (Fc) of the antenna circuit of the NFC component.

31. NFC component according to one of claims 16 to 30, comprising means (RFINT) for extracting an alternating signal (S2(Fc)) from the antenna circuit (ACT), and wherein the interface circuit (ECT, INT3) uses the alternating signal (S2(Fc)) extracted from the antenna circuit (ACT) as emulation signal (AES).

32. NFC component according to claim 31, comprising an active operating mode where the NFC component applies a triggering signal (S1(Fc)) to the antenna circuit (ACT) and a passive operating mode where the NFC component extracts the alternating signal (S2(Fc)) from the antenna circuit.

33. NFC component according to one of claims 16 to 32, comprising:
- a second connection terminal (NB) to connect a second (TB) antenna connection terminal (TA, TB) of the host integrated circuit, and
- means (VREF) for applying a direct voltage (Vcc) to the second antenna connection terminal (NB), to electrically feed the host integrated circuit.

34. NFC component according to one of claims 16 to 33, comprising a ground terminal (NG) to connect a ground terminal (TG) of the host integrated circuit to a ground circuit of the NFC component.

## Patentansprüche

1. Verfahren zum Erstellen eines Datenpfads zwischen einem integrierten Host-Schaltkreis (ICC) und einer NFC-Komponente (NFCM1) umfassend einen Antennenschaltkreis (ACT) für das Empfangen und das Senden von Daten ohne Kontakt,
Verfahren **dadurch gekennzeichnet, dass** der integrierte Host-Schaltkreis (ICC) Antennenverbindungsklemmen (TA, TB) und Mittel (MCT, DMCT, SWm) zum Empfangen und Senden von Daten durch das Demodulieren eines an den Antennenverbindungsklemmen empfangenen Antennensignals (Sac) umfasst,
und **dadurch dass** es Schritte umfasst, die darin bestehen,:
- die Antennenverbindungsklemmen (TA, TB) des integrierten Host-Schaltkreises nicht an eine Antenne (La) anzuschließen,
- mit Hilfe einer Drahtverbindung (NA-TA) zumindest eine erste (TA) der Antennenverbindungsklemmen (TA, TB) des integrierten Host-Schaltkreises mit der NFC-Komponente (NFCM1, NA) zu verbinden,
- derart zumindest der ersten (NA) Antennenverbindungsklemme ein von der NFC-Komponente abgegebenes Alternativemulationssignal (AES) zuzuführen, dass die Anwesenheit eines Antennensignals (Sac) emuliert wird,
- von der NFC-Komponente abgegebene Daten (DTr) in das Emulationssignal (AES) zu injizieren, und
- im Emulationssignal (AES) vom integrierten Host-Schaltkreis gesendete Daten (DTx) zu entnehmen und sie an die NFC-Komponente abzugeben.

2. Verfahren nach Anspruch 1, in dem der Schritt des Injizierens von Daten (DTr) in das Emulationssignal (AES) einen Schritt des Modulierens des Emulationssignals (AES) mit Hilfe eines Daten tragenden Signals (SDTr1, SDTr2) umfasst.

3. Verfahren nach Anspruch 2, umfassend einen Schritt, der darin besteht, das Daten tragende Signal (SDTr1) durch Demodulieren (RFDEM) eines Antennensignals (Vac1), das im Antennenschaltkreis (ACT) der NFC-Komponente empfangen wird, zu erzeugen, so dass von der NFC-Komponente empfangene Daten auf transparente Art und Weise dem integrierten Host-Schaltkreis übertragen werden.

4. Verfahren nach Anspruch 1, in dem der Schritt des Injizierens von Daten (DTr) in das Emulationssignal (AES) Schritte umfasst, die darin bestehen,:
- ein Antennensignal (Vac1), das im Antennenschaltkreis (ACT) der NFC-Komponente empfangen wird, zu demodulieren (RFDEM), um ein erstes Daten tragendes Signal (SDTr1) zu erzeugen,
- das erste Daten tragende Signal (SDTr1) zu dekodieren,
- anhand von Daten (DTr), die im ersten Daten tragenden Signal (SDTr1) vorhanden sind, ein zweites Daten tragendes Signal (SDTr2) zu rekonstruieren, und
- das Emulationssignal (AES) mit Hilfe des zweiten Daten tragenden Signals (SDTr2) zu modulieren.

5. Verfahren nach Anspruch 4, in dem das zweite Daten tragende Signal (SDTr2) eine Kodierung aufweist, die sich von einer Kodierung des ersten Daten tragenden Signals (SDTr1) unterscheidet.

6. Verfahren nach einem der Ansprüche 1 bis 5, in dem der Schritt der Entnahme von Daten (DTx) im Emulationssignal (AES) einen Schritt der Entnahme eines Daten tragenden (DTx) Rückmodulationssignals (SDTx', SDTx, SDTx1) durch Erfassen von Strom- oder Spannungsschwankungen im Emulationssignal (AES) umfasst.

7. Verfahren nach Anspruch 6, umfassend einen Schritt, der darin besteht, das Rückmodulationssignal (SDTx) einem Modulatorschaltkreis (RFMOD) der NFC-Komponente zuzuführen, damit die NFC-Komponente auf transparente Art und Weise die Daten wieder über den Antennenschaltkreis (ACT) sendet.

8. Verfahren nach einem der Ansprüche 1 bis 7, in dem der Schritt der Entnahme von Daten (DTx) im Emulationssignal (AES) Schritte umfasst, die darin bestehen,:
- dem Emulationssignal (AES) ein erstes Daten tragendes (DTx) Rückmodulationssignal (SDTx1) zu entnehmen,
- das erste Rückmodulationssignal (SDTx1) zu dekodieren,
- ein zweites Rückmodulationssignal (SDTx2) anhand von Daten (DTx), die im ersten Rückmodulationssignal (SDTx1) vorhanden sind, zu rekonstruieren, und
- das zweite Rückmodulationssignal (SDTx2) einem Modulatorschaltkreis (RFMOD) zuzuführen, um die Daten über den Antennenschaltkreis (ACT) der NFC-Komponente zu senden.

9. Verfahren nach Anspruch 8, in dem das zweite Rückmodulationssignal (SDTx2) eine Kodierung, die sich von einer Kodierung des ersten Ausgangsdaten tragenden Signals (SDTx1) unterscheidet, aufweist.

10. Verfahren nach einem der Ansprüche 1 bis 9, in dem der Emulationssignal (AES) mit derselben Frequenz (Fc) wie eine Arbeitsfrequenz (Fc) des Antennenschaltkreises (ACT) der NFC-Komponente oszilliert.

11. Verfahren nach einem der Ansprüche 1 bis 9, in dem das Emulationssignal (AES) mit einer Frequenz (Fc'), die sich von einer Arbeitsfrequenz (Fc) des Antennenschaltkreises (ACT) der NFC-Komponente unterscheidet, oszilliert.

12. Verfahren nach einem der Ansprüche 1 bis 11, umfassend einen Schritt, der darin besteht, dem Antennenschaltkreis (ACT) ein Alternativsignal (S2(Fc)) zu entnehmen, und das Alternativsignal (S2(Fc)) als Emulationssignal (AES) zu verwenden.

13. Verfahren nach Anspruch 12, umfassend einen Schritt, der darin besteht, die NFC-Komponente zu konfigurieren, damit sie einen aktiven Funktionsmodus, in dem die NFC-Komponente ein Erregungssignal (S1(Fc)) dem Antennenschaltkreis (ACT) zuführt, und einen passiven Funktionsmodus, in dem die NFC-Komponente das Alternativsignal (S2(Fc)) dem Antennenschaltkreis entnimmt, umfasst.

14. Verfahren nach einem der Ansprüche 1 bis 13, umfassend Schritte, die darin bestehen,:
- mit Hilfe einer Drahtverbindung (NB-TB) eine zweite (TB) der Antennenverbindungsklemmen (TA, TB) mit der NFC-Komponente (NFCM1, NB) zu verbinden, und
- an die zweite Antennenverbindungsklemme (NB) eine Gleichspannung (Vcc) anzulegen, um den integrierten Host-Schaltkreis mit Strom zu versorgen.

15. Verfahren nach einem der Ansprüche 1 bis 14, umfassend einen Schritt, der darin besteht, eine Masseklemme (TG) des integrierten Host-Schaltkreises mit einer Masseklemme (NG) der NFC-Komponente zu verbinden.

16. NFC-Komponente umfassend einen Antennenschaltkreis (ACT, Lr) für das Empfangen und das Senden von Daten ohne Kontakt, und vorgesehen zur Aufnahme von zumindest einem integrierten Host-Schaltkreis (ICC), um Daten mit dem integrierten Host-Schaltkreis auszutauschen, **dadurch gekennzeichnet, dass** sie umfasst:
- zumindest eine Verbindungsklemme (NA), um eine Antennenverbindungsklemme (TA) eines integrierten Host-Schaltkreises des Typs, der ohne Kontakt (ICC) funktioniert jedoch nicht mit einer Antenne (La) versehen ist, anzuschließen, und
- einen Schnittstellenschaltkreis (ECT, INT3), um:
- derart ein Alternativemulationssignal (AES) der Antennenverbindungsklemme (TA) des integrierten Host-Schaltkreises zuzuführen, dass die Anwesenheit eines Antennensignals emuliert wird,
- von der NFC-Komponente abgegebene Daten (DTr) in das Emulationssignal (AES) zu injizieren, und
- im Emulationssignal (AES) vom integrierten Host-Schaltkreis gesendete Daten (DTx) zu entnehmen.

17. NFC-Komponente nach Anspruch 16, in der der Schnittstellenschaltkreis (ECT, INT3) angeordnet ist, um Daten (DTr) in das Emulationssignal (AES) durch Modulieren des Emulationssignals (AES) mit Hilfe eines Daten tragenden Signals (SDTr1, SDTr2) zu injizieren.

18. NFC-Komponente nach Anspruch 17, umfassend einen Demodulator (RFDEM) zum Demodulieren eines im Antennenschaltkreis (ACT) empfangenen Antennensignals (Vac1) und in dem das Daten tragende Signal (SDTr1) an den Schnittstellenschaltkreis (ECT) ohne Verarbeitung abgegeben wird, so dass über den Antennenschaltkreis (ACT) empfangene Daten auf transparente Art und Weise dem integrierten Host-Schaltkreis übertragen werden.

19. NFC-Komponente nach Anspruch 17, umfassend:
- einen Demodulator (RFDEM) zum Demodulieren eines im Antennenschaltkreis (ACT) empfangenen Antennensignals (Vac1) und zum Abgeben eines ersten Daten tragenden Signals (SDTr1) an den Schnittstellenschaltkreis,
- erste Verarbeitungsmittel (NFCC, MCT1, UC) zum Rekonstruieren eines zweiten Daten tragenden Signals (SDTr2) anhand von Daten (DTr), die im ersten Daten tragenden Signal (SDTr1) vorhanden sind, und
- ein Modulatorschaltkreis (MCT) zum Modulieren des Emulationssignals (AES) mit Hilfe des zweiten Daten tragenden Signals (SDTr2).

20. NFC-Komponente nach Anspruch 19, in der die ersten Verarbeitungsmittel (NFCC, MCT1, UC) das zweite Daten tragende Signal (SDTr2) mit einer Kodierung, die sich von einer Kodierung des ersten Daten tragenden Signals (SDTr1) unterscheidet, rekonstruieren.

21. NFC-Komponente nach Ansprüchen 19 und 20, in der die ersten Verarbeitungsmittel einen Hauptkontroller (NFCC) der NFC-Komponente umfassen.

22. NFC-Komponente nach einem der Ansprüche 19 und 20, in der die ersten Verarbeitungsmittel einen dedizierten Modulatorschaltkreis (MCT1) des Schnittstellenschaltkreises (INT3), der sich von einem Hauptkontroller (NFCC) der NFC-Komponente unterscheidet, umfassen.

23. NFC-Komponente nach einem der Ansprüche 16 bis 22, in der der Schnittstellenschaltkreis (ECT, INT3) einen Erkennungsschaltkreis (SCT) umfasst, um Strom- oder Spannungsschwankungen im Emulationssignal (AES) zu erkennen und dem Emulationssignal (AES) ein Daten tragendes (DTx) Rückmodulationssignal (SDTx', SDTx, SDTx1) zu entnehmen.

24. NFC-Komponente nach Anspruch 23, umfassend einen Modulatorschaltkreis (RFMOD) zum Senden von Daten über den Antennenschaltkreis (ACT), und in der das Rückmodulationssignal (SDTx) ohne Verarbeitung dem Modulatorschaltkreis (RFMOD) zugeführt wird, damit die NFC-Komponente die Daten auf transparente Art und Weise wieder über den Antennenschaltkreis (ACT) sendet.

25. NFC-Komponente nach Anspruch 23, umfassend:
- zweite Verarbeitungsmittel (NFCC, DMCT1, UC) zum Rekonstruieren eines zweiten Rückmodulationssignals (SDTx2) anhand von Daten (DTx), die im ersten Rückmodulationssignal (SDTx1) vorhanden sind, und
- einen Modulatorschaltkreis (RFMOD) zum Zuführen des zweiten Rückmodulationssignals (SDTx2) an den Antennenschaltkreis (ACT) und zum Senden der Daten über den Antennenschaltkreis (ACT) der NFC-Komponente.

26. NFC-Komponente nach Anspruch 25, in der die zweiten Verarbeitungsmittel (NFCC, DMCT1, UC) das zweite Daten tragende Signal (SDTx2) mit ein Kodierung, die sich von einer Kodierung des ersten Daten tragenden Signals (SDTx1) unterscheidet, rekonstruieren.

27. NFC-Komponente nach Ansprüchen 25 und 26, in der die zweiten Verarbeitungsmittel einen Hauptkontroller (NFCC) der NFC-Komponente umfassen.

28. NFC-Komponente nach Ansprüchen 25 und 26, in der die zweiten Verarbeitungsmittel einen dedizierten Demodulatorschaltkreis (DMCT1) des Schnittstellenschaltkreises (INT3), der sich von einem Hauptkontroller (NFCC) der NFC-Komponente unterscheidet, umfassen, um die Daten, die im ersten Rückmodulationssignal (SDTx1) vorhanden sind, zu entnehmen.

29. NFC-Komponente nach einem der Ansprüche 16 bis 28, in der das Emulationssignal (AES) mit derselben Frequenz (Fc) wie eine Arbeitsfrequenz (Fc) des Antennenschaltkreises der NFC-Komponente oszilliert.

30. NFC-Komponente nach einem der Ansprüche 16 bis 28, in der das Emulationssignal (AES) mit einer Frequenz (Fc'), die sich von einer Arbeitsfrequenz (Fc) des Antennenschaltkreises der NFC-Komponente unterscheidet, oszilliert.

31. NFC-Komponente nach einem der Ansprüche 16 bis 30, umfassend Mittel (RFINT) zum Entnehmen eines Alternativsignals (S2(Fc)) des Antennenschaltkreises (ACT), und in der der Schnittstellenschaltkreis (ECT, INT3) das Alternativsignal (S2(Fc)), das dem Antennenschaltkreis (ACT) entnommen wird, als Emulationssignal (AES) verwendet.

32. NFC-Komponente nach Anspruch 31, umfassend einen aktiven Funktionsmodus, in dem die NFC-Komponente ein Erregungssignal (S1(Fc)) dem Antennenschaltkreis (ACT) zuführt und einen passiven Funktionsmodus, in dem die NFC-Komponente das Alternativsignal (S2(Fc)) dem Antennenschaltkreis entnimmt.

33. NFC-Komponente nach einem der Ansprüche 16 bis 32, umfassend:
- eine zweite Verbindungsklemme (NB), um eine zweite (TB) der Antennenverbindungsklemmen (TA, TB) des integrierten Host-Schaltkreises anzuschließen, und
- Mittel (VREF) zum Anlegen einer Gleichspannung (Vcc) an die zweite Antennenverbindungsklemme (NB), um den integrierten Host-Schaltkreis mit Strom zu versorgen.

34. NFC-Komponente nach einem der Ansprüche 16 bis 33, umfassend eine Masseklemme (NG), um eine Masseklemme (TG) des integrierten Host-Schaltkreises an einen Massenschaltkreis der NFC-Komponente anzuschließen.
